# EUROPEAN PATENT APPLICATION

(11) **EP 2 950 547 A1**
(43) Date of publication of application: **02.12.2015**
(21) Application number: 15169211.8
(22) Date of filing: 26.05.2015
(51) Int. Cl.: H04N 21/254, H04N 5/765, H04N 5/85, H04N 5/913, H04N 21/81, H04N 21/8355, H04N 5/781, H04N 21/258, H04N 21/44

(54) **CONTENT REPRODUCTION DEVICE, MANAGEMENT SERVER AND METHOD FOR REPRODUCING A CONTENT**

(30) Priority: 26.05.2014 JP 2014108429
(71) Applicant: Funai Electric Co., Ltd., Daito city Osaka 574-0013 (JP)
(72) Inventor: Hironori, Tani, Osaka, Osaka 574-0013 (JP)
(74) Representative: Osha Liang

(57) **Abstract**

A reproduction device (1a) includes a controller (11) that rips a content (21) from a storage medium (2) and a communication unit (12) that communicates with an external apparatus; wherein based on permission information of the ripping which is acquired via the communication unit, the controller performs reproduction of first advertisement information further acquired via the communication unit before starting reproduction of the content.

## Description

### [Technical Field]

The present invention relates to a content reproduction device and an advertisement information delivery system, e.g., a content reproduction device and an advertisement information delivery system including a control unit that performs a control of reading a content from an external storage medium and storing the read content in a storage unit.

### [Background Art]

A conventional content reproduction device and a conventional advertisement information delivery system include a control unit that performs a control of reading a content from an external storage medium and storing the read content in a storage unit (for example, see Patent Literature 1).

Patent Literature 1 discloses an AV system including a ripping unit that stores in a hard disk an AV content stored in a music CD (Compact Disc). This AV system includes a personal computer and a home server. Moreover, the personal computer is configured to connect to the home server and be authenticated (be permitted to perform a ripping process (or simply "ripping") when storing the AV content to the hard disk from the music CD. Moreover, the personal computer is configured to not perform the ripping process of the AV content if authentication with the home server fails. As a result, the AV content can be prevented from being ripped endlessly from the music CD.

### [Citation List] [Patent Literature]

[Patent Literature 1] Japanese Unexamined Patent Application Publication No. 2004-63032

Here, new standards for Blu-ray Discs (Registered Trademark) are being developed by the BDA (Blu-ray Disc Association) and the like. There are plans to include in these new standards for Blu-ray Discs a copyright management method (for example, BD Bridge) that allows a content stored in a storage medium (Blu-ray Disc) to be stored (ripped) to a secondary storage medium (internal storage unit or external storage unit). In this situation, a method is being considered where, when ripping the content (and advertisement information) from the external storage medium, the content reproduction device is connected to a copyright management server via the Internet and permission for ripping is obtained from the copyright management server before starting the ripping process.

Furthermore, the above content reproduction device, when ripping the content, stores advertisement information of when the external storage medium is released in addition to the content. Because of this, a user is faced with an inconvenience of only being able to view (old) advertisement information (from the time of the release) stored in the external storage medium.

### [Summary of the Invention]

One or more embodiments of the present invention provide a content reproduction device and an advertisement information delivery system that enables viewing of new (the newest) advertisement information while protecting a copyright of a content.

In one aspect, a content reproduction device according to one or more embodiments of the present invention may comprise a content reproduction device main body; and a control unit that performs a ripping process that reads a content from an external storage medium and stores the read content in an internal storage unit provided inside the content reproduction device main body or an external storage unit; wherein the control unit is configured to perform a control where, in a situation where the ripping process is permitted by an external copyright management server, reproduction is performed for advertisement information acquired from the external copyright management server at the time of the ripping process or when starting reproduction of the content. "At the time of the ripping process" is not limited to the time during which the ripping process is performed (in the midst of storing the content and the advertisement information in the internal storage unit or the external storage unit), and can more broadly represent a period during authentication with the copyright management server before starting the ripping process (to obtain permission for the ripping process).

In the content reproduction device according to one or more embodiments of the present invention, as above, the control unit is configured to perform a control where, in a situation where the ripping process is permitted by an external copyright management server, reproduction is performed for advertisement information acquired from the external copyright management server at the time of the ripping process or when starting reproduction of the content. As a result, in one or more embodiments, in a situation where the external copyright management server does not permit the ripping process, the ripping process of the content is not performed. As a result, the content is not ripped endlessly, and the copyright of the content can therefore be protected. Moreover, because the advertisement information is acquired from the external copyright management server and reproduction thereof is performed, the user can view new advertisement information. Further still, the new advertisement information can be viewed while protecting the copyright of the content.

In the content reproduction device according to one or more embodiments, the control unit may be configured to perform a control where, when starting the ripping process, in a situation where the external copyright management server determines that a processing count of the ripping process is no more than a limit count of the ripping process and the ripping process is permitted by the external copyright management server, reproduction is performed for the advertisement information acquired from the external copyright management server at the time of the ripping process or when starting reproduction of the content. As a result, in one or more embodiments, even in a situation where the ripping process is performed a plurality of times, at each time, the user can view new advertisement information.

In the content reproduction device according to one or more embodiments, the control unit may be configured to perform a control where, when starting the ripping process, in the situation where the ripping process is permitted by the external copyright management server, the newest advertisement information is acquired from the external copyright management server, and reproduction is performed for the acquired newest advertisement information at the time of the ripping process or when starting reproduction of the content. As a result, in one or more embodiments, the user can view the newest advertisement information.

In this situation, the content and the advertisement information can be stored in advance in the external storage medium, and the control unit is configured to perform a control where, when starting the ripping process, in the situation where the ripping process is permitted by the external copyright management server, the newest advertisement information is acquired from the external copyright management server, and the content stored in the external storage medium and the acquired newest advertisement information are stored in the internal storage unit or the external storage unit. As a result, in one or more embodiments, the advertisement information stored in the external storage medium can be replaced with the newest advertisement information and stored in the internal storage unit or the external storage unit. Further, the user can easily view the newest advertisement information.

In the content reproduction device according to one or more embodiments, the content and the advertisement information can be stored in advance in the external storage medium, and the control unit is configured to perform a control where, at the time of the ripping process, the advertisement information is not stored in the internal storage unit or the external storage unit, and when starting reproduction of the content, the advertisement information is streamed from the external copyright management server to perform reproduction thereof. As a result, in one or more embodiments, a usage capacity of the internal storage unit or the external storage unit for the ripping process can be reduced by an extent of the advertisement information not being stored in the internal storage unit or the external storage unit.

In the content reproduction device according to one or more embodiments, the control unit may be configured to perform a control where, in a situation where information of the advertisement information stored in the internal storage unit or the external storage unit for the external copyright management server to determine whether to send the newest advertisement information is sent to the external copyright management server and the newest advertisement information and the advertisement information stored in the internal storage unit or the external storage unit match, the newest advertisement information is not sent from the external copyright management server; in a situation where the newest advertisement information and the advertisement information stored in the internal storage unit or the external storage unit do not match, the newest advertisement information is sent from the external copyright management server; and in a situation where the newest advertisement information is sent from the external copyright management server, the newest advertisement information is acquired. As a result, in one or more embodiments, because the advertisement information is sent from the external copyright management server only in the situation where the advertisement information stored in the internal storage unit or the external storage unit is not the newest advertisement information, a communication volume between the content reproduction device and the external copyright management server can be prevented from increasing. Moreover, because the advertisement information is not sent in the situation where the advertisement information stored in the internal storage unit or the external storage unit is the newest advertisement information, a time required for the ripping process can be omitted.

In the content reproduction device according to one or more embodiments, the external copyright management server may include a plurality of advertisement information with mutually different content, and the control unit is configured to perform a control where at least ripping history information, which is history information relating to a content of the content ripped thus far, or reproduction count information, which is information of a reproduction count of the ripping-processed content, is sent to the external copyright management server, and advertisement information based on at least the ripping history information or the reproduction count information in the plurality of advertisement information is acquired from the external copyright management server. Here, it is thought that a preferred content of the user comes to have a large ripping processing count and reproduction count. Therefore, as above, by acquiring the advertisement information based on at least the ripping history information or the reproduction count information from among the plurality of advertisement information, advertisement information suiting the taste of the user can be acquired.

In the content reproduction device according to one or more embodiments, the control unit may be configured to perform a control where remaining amount information of a storage capacity of the internal storage unit or the external storage unit is sent to the external copyright management server, and advertisement information having a capacity corresponding to the remaining amount information is acquired from the external copyright management server. As a result, in one or more embodiments, even in a situation where the remaining amount of the storage capacity of the internal storage unit or the external storage unit is small, by, for example, lowering an image quality of the advertisement information or the like, the advertisement information can be acquired from the external copyright management server.

The content reproduction device according to one or more embodiments may further have an operation unit configured to be able to accept an operation from a user; wherein the control unit is configured to perform a control where, at the time of the ripping process, based on a selected operation using the operation unit by the user, it is determined whether to acquire the advertisement information from the external copyright management server. As a result, in one or more embodiments, the advertisement information can be acquired from the external copyright management server according to a need of the user. For example, to omit a time required to acquire the advertisement information, acquiring the advertisement information from the external copyright management server can be rejected.

In the content reproduction device according to one or more embodiments, the advertisement information may include second advertisement information and first advertisement information whose reproduction time may be longer than that of the second advertisement information, and the control unit is configured to perform a control where, at the time of the ripping process, at least the first advertisement information is acquired from among the second advertisement information and the first advertisement information from the external storage medium or the external copyright management server, at least the second advertisement information from among the acquired second advertisement information and first advertisement information is stored in the internal storage unit or the external storage unit, and, when starting reproduction of the content, in a situation where a connection cannot be made with the external copyright management server, after performing reproduction of the first advertisement information, reproduction of the content is started. As a result, in one or more embodiments, even in the situation where the connection cannot be made to the external copyright management server, reproduction of the content can be started while providing more advertisement information to the user.

In another aspect, an advertisement information delivery system according to one or more embodiments of the present invention may include: a content reproduction device that includes a content reproduction device main body and a device-side control unit that performs a ripping process that reads a content from a storage medium and stores the read content in an internal storage unit provided inside the content reproduction device main body or an external storage unit; and a copyright management server that is configured to be connectable to the content reproduction device and includes a server-side control unit that permits the ripping process when connected to the content reproduction device and a server-side storage unit in which advertisement information configured to be readable by the server-side control unit is stored in advance; wherein the device-side control unit is configured to perform a control where, in a situation where the ripping process is permitted by the copyright management server, reproduction is performed for the advertisement information acquired from the copyright management server at the time of the ripping process or when starting reproduction of the content.

In the advertisement information delivery system according to one or more embodiments, as above, the device-side control unit is configured, in the situation where the ripping process is permitted by the external copyright management server, to perform the control of performing reproduction of the advertisement information acquired from the external copyright management server at the time of the ripping process or when starting reproduction of the content. As a result, even in the advertisement information delivery system according to one or more embodiments, the new advertisement information can be viewed while protecting the copyright of the content.

In another aspect, a reproduction device according to one or more embodiments of the present invention may comprise a controller configured to rip a content from a storage medium and a communication unit configured to communicate with an external apparatus, wherein based on permission information of the ripping which is acquired via the communication unit, the controller reproduces first advertisement information acquired via the communication unit before reproducing the content. In one or more embodiments, the reproduction device is configured to acquire via the communication unit permission information of the ripping. In one or more embodiments, the reproduction device is configured to reproduce the first advertisement information and to reproduce the content.

The reproduction device may be a content reproduction device according to any embodiment disclosed herein. In one or more embodiments of the reproduction device, the external apparatus that communicates with the communication unit of the reproduction device is or comprises a management server according to the present disclosure. In one or more embodiments of the reproduction device, the permission information is information indicating whether ripping is permitted.

A management server according to one or more embodiments of the present invention may comprise a communication unit configured to communicate with an external apparatus; a controller configured to determine a propriety of ripping by the external apparatus; and a storage unit configured to store first advertisement information, wherein the controller is configured to send the first advertisement information when the controller sends permission information for ripping to the external apparatus.

The management server may be a copyright management server device according to any embodiment disclosed herein. In one or more embodiments of the management server, the external apparatus that communicates with the communication unit of the management server is or comprises a reproduction device according to the present disclosure.

A method for reproducing a content according to one or more embodiments of the present invention may comprise sending permission information of ripping the content from a storage medium from a management server to a reproduction device, sending advertisement information from the management server to the reproduction device, and performing reproduction of the advertisement information using the reproduction device before starting reproduction of the content, wherein the management server is connected to the reproduction device via an external apparatus.

Embodiments of the above-mentioned reproduction device, management server and method are defined in the dependent claims.

One or more embodiments of the method may be implemented using instructions executed by one or more processors of the reproduction device and/or management server. Further, such instructions may correspond to computer readable instructions that are stored on one or more non-transitory computer readable media. The computer readable instructions stored on the non-transitory computer readable medium comprise instructions which, when executed by a processor, may perform one or more steps of any method and/or any embodiment disclosed herein.

Unless otherwise stated, various aspects and features of one or more embodiments described herein may be practiced separately or combined together.

According to one or more embodiments of the present invention, as above, the new (newest) advertisement information can be viewed while protecting the copyright of the content.

### [Brief Description of Drawings]

[FIG. 1] This is a block diagram illustrating an overall configuration of a content reproduction device according to one or more embodiments of the present invention.
[FIG. 2] This is a flowchart for describing a ripping control process according to one or more embodiments of the present invention.
[FIG. 3] This is a flowchart for describing the ripping control process according to one or more embodiments of the present invention.
[FIG. 4] This is a flowchart for describing the ripping control process according to one or more embodiments of the present invention.
[FIG. 5] This is a flowchart for describing a content reproduction control process according to one or more embodiments of the present invention.
[FIG. 6] This is a block diagram illustrating an overall configuration of a content reproduction device according to one or more embodiments of the present invention.
[FIG. 7] This is a flowchart for describing the ripping control process according to one or more embodiments of the present invention.
[FIG. 8] This is a flowchart for describing the ripping control process according to one or more embodiments of the present invention.
[FIG. 9] This is a block diagram illustrating an overall configuration of a content reproduction device according to one or more embodiments of the present invention.
[FIG. 10] This is a flowchart for describing the ripping control process according to one or more embodiments of the present invention.
[FIG. 11] This is a diagram for describing a display prompting determination of whether to request server-side advertisement information according to one or more embodiments of the present invention.
[FIG. 12] This is a flowchart for describing the ripping control process according to one or more embodiments of the present invention.
[FIG. 13] This is a flowchart for describing a sending process of a ripping start request signal and an advertisement request signal according to one or more embodiments of the present invention.
[FIG. 14] This is a block diagram illustrating an overall configuration of a content reproduction device according to one or more embodiments of the present invention.
[FIG. 15] This is a flowchart (1) for describing the ripping control process according to one or more embodiments of the present invention.
[FIG. 16] This is a flowchart (2) for describing the ripping control process according to one or more embodiments of the present invention.
[FIG. 17] This is a block diagram illustrating an overall configuration of a content reproduction device according to one or more embodiments of the present invention.
[FIG. 18] This is a flowchart for describing the ripping control process according to one or more embodiments of the present invention.
[FIG. 19] This is a flowchart for describing the content reproduction control process according to one or more embodiments of the present invention.

### [Detailed Description of Embodiments of the Invention]

Embodiments of the present invention will be described below based on the drawings. One or more embodiments of the present invention relate to a content reproduction device and an advertisement information delivery system and more particularly relates to a content reproduction device and an advertisement information delivery system including a control unit that performs a control of reading a content from an external storage medium and storing the read content in a storage unit.

### (First Example)

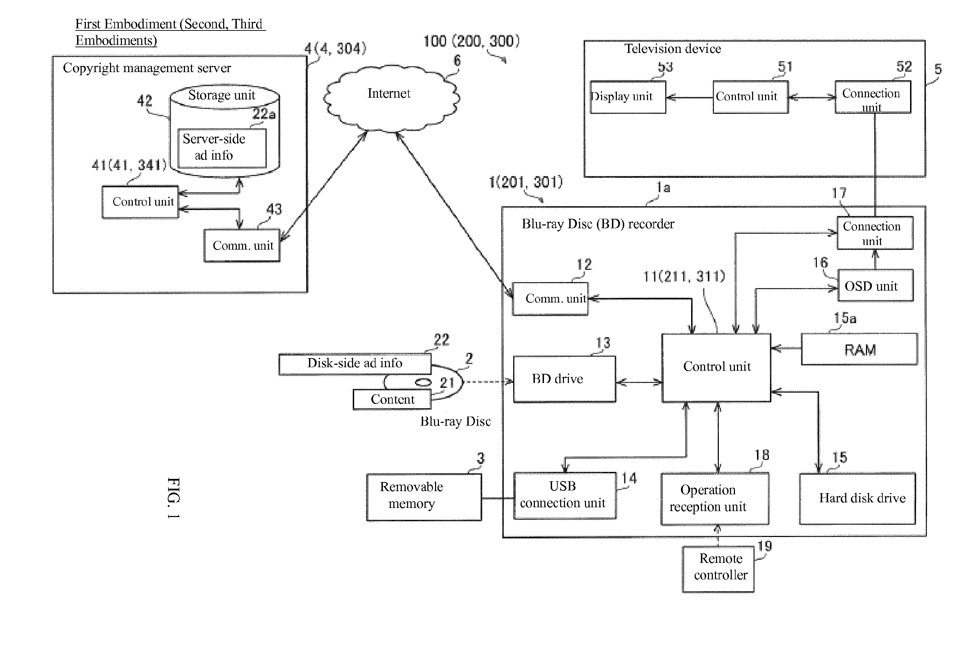

A configuration of an advertisement information delivery system 100 according to a first example of the present invention will be described with reference to FIG. 1.

As illustrated in FIG. 1, in the advertisement information delivery system 100 according to one or more embodiments of the first example of the present invention includes a Blu-ray Disc (BD) recorder 1, a copyright management server (or "management server") 4, and a television device 5. The BD recorder 1 is configured so a Blu-ray Disc 2 can be inserted therein. Moreover, the BD recorder 1 is configured to be connectable to an external removable memory 3. The BD recorder 1 is an example of the "content reproduction device" of the present invention. Moreover, the Blu-ray Disc 2 is an example of the "external storage medium" of the present invention. Moreover, the removable memory 3 is an example of the "external storage unit" of the present invention. The BD recorder 1 includes a control unit (or "controller") 11, communication unit 12, BD drive 13, USB connection unit 14, hard disk drive 15, RAM (Random Access Memory) 15a, OSD (On-Screen Display) unit 16, connection unit 17, operation reception unit 18, and BD recorder main body unit 1a.

The copyright management server 4 is configured to be able to communicate with the BD recorder 1 via the Internet 6.

The television device 5 is connected to the BD recorder 1 via a cable.

Furthermore, the Blu-ray Disc 2 stores in advance a content 21 made from video, audio, and the like and disk-side advertisement information 22 that includes advertisement information of a maker that manufactures the content 21, guidance information relating to the content 21, and the like.

Furthermore, as illustrated in FIG. 1, the removable memory 3 is made from a nonvolatile memory and is configured to be connectable to a USB (Universal Serial Bus) connection unit 14 that will be described below of the BD recorder 1. Moreover, the removable memory 3 is configured to be able to send and receive data (for example, the content 21, the disk-side advertisement information 22, and the like) with the BD recorder 1 via the USB connection unit 14. Moreover, the removable memory 3 is configured to be able to store the received data therein.

The control unit 11 includes a CPU (Central Processing Unit). Moreover, the control unit 11 is configured to control the entire BD recorder 1 by transmitting a control signal to each portion of the BD recorder 1.

The communication unit 12 is configured to be connectable to the copyright management server 4 via the Internet 6.

The BD drive 13 is configured so the Blu-ray Disc 2 can be inserted into the BD recorder 1. Moreover, the BD drive 13 includes a blue-violet semiconductor laser (not illustrated) and is configured to be able to read the content 21 and the disk-side advertisement information 22 stored in the Blu-ray Disc 2 based on an instruction from the control unit 11.

The USB connection unit 14 includes a terminal based on USB standards and is configured to be connectable to the removable memory 3. Moreover, the BD recorder 1 is configured to send and receive data such as the content 21 with the removable memory 3 via the USB connection unit 14.

The hard disk drive 15 is configured so the content 21 and the disk-side advertisement information 22 acquired from the Blu-ray Disc 2 are stored thereon. Moreover, the hard disk drive 15 is configured to be able to read the stored content 21, disk-side advertisement information 22, and the like based on an instruction from the control unit 11. The hard disk drive 15 is an example of the "internal storage unit" of the present invention.

The RAM 15a is configured to be able to temporarily store acquired server-side advertisement information 22a, which will be described below, if the BD recorder 1 acquires (streams) the server-side advertisement information 22a from the copyright management server 4.

The OSD (On-Screen Display) unit 16 can output an image to a display unit 53 that will be described below of the television device 5. The OSD unit 16 is configured to be able to output an image (for example, an image [not illustrated] for having a user select a content for reproduction or the like) based on an instruction from the control unit 11.

The connection unit 17 is configured to be connectable to the television device 5 via a cable. Moreover, the connection unit 17 is configured to transmit from the BD recorder 1 to the television device 5 video and audio signals of the content 21, the disk-side advertisement information 22, and the like; an image output from the OSD unit 16; and the like.

The operation reception unit 18 includes a light-receiving element or the like. Moreover, the light-receiving element is configured to receive an infrared light emitted from a remote controller 19 that will be described below and to acquire operation information of the user. Moreover, the operation reception unit 18 is configured to transmit the acquired operation information of the user to the control unit 11.

Furthermore, the remote controller 19 is provided to the BD recorder 1. The remote controller 19 is configured to accept an operation of the user. The remote controller 19 includes a light-emitting element or the like and is configured to send from the light-emitting element the accepted operation information of the user to an operation sending unit 18 using the infrared light.

The BD recorder main body unit 1a includes the hard disk drive 15 and the like described above. The BD recorder main body unit 1a is an example of the "content reproduction device main body" of the present invention.

Furthermore, as illustrated in FIG. 1, the copyright management server 4 includes a control unit 41, storage unit 42, and communication unit 43. The control unit 41 includes a CPU or the like and is configured to control the entire copyright management server 4 by transmitting a control signal to each portion of the copyright management server 4.

The storage unit 42 stores in advance the server-side advertisement information 22a, which relates to commercially-available Blu-ray Discs (including the Blu-ray Disc 2). Moreover, the storage unit 42 stores a processing count of a ripping process for each Blu-ray Disc (including the Blu-ray Disc 2). Moreover, the control unit 41 is configured to increase the processing count of the ripping process by one if a ripping start request signal is acquired from the BD recorder 1 and the ripping process is permitted. Moreover, the control unit 41 is configured to not permit reproduction of the content 21 if the processing count of the ripping process is not no more than a limit count (for example, ten times) of the ripping process.

Here, in accordance with one or more embodiments of the first example, the copyright management server 4 is configured to renew a content of the server-side advertisement information 22a to the newest content. For example, the configuration is such that contents of the disk-side advertisement information 22 and the server-side advertisement information 22a match when the Blu-ray Disc 2 is released. Meanwhile, if time is elapsed, because the content of the server-side advertisement information 22a is renewed to the newest content, the contents of the disk-side advertisement information 22 and the server-side advertisement information 22a do not match.

The communication unit 43 is configured to be able to communicate with the Internet 6. Moreover, the communication unit 43 is configured to be able to send and receive data with the BD recorder 1 via the Internet 6.

Furthermore, as illustrated in FIG. 1, the television device 5 includes a control unit 51, connection unit 52, and display unit 53. The control unit 51 includes a CPU or the like and is configured to control the entire television device 5 by transmitting a control signal to each portion of the television device 5.

The connection unit 52 is configured to be connectable to the BD recorder 1 via a cable. Moreover, the connection unit 52 is configured to be able to receive video, audio, and image data (the content 21 and the like).

As described above, the display unit 53 is configured to display the content 21 and the like received via the connection unit 52 based on an instruction from the control unit 51.

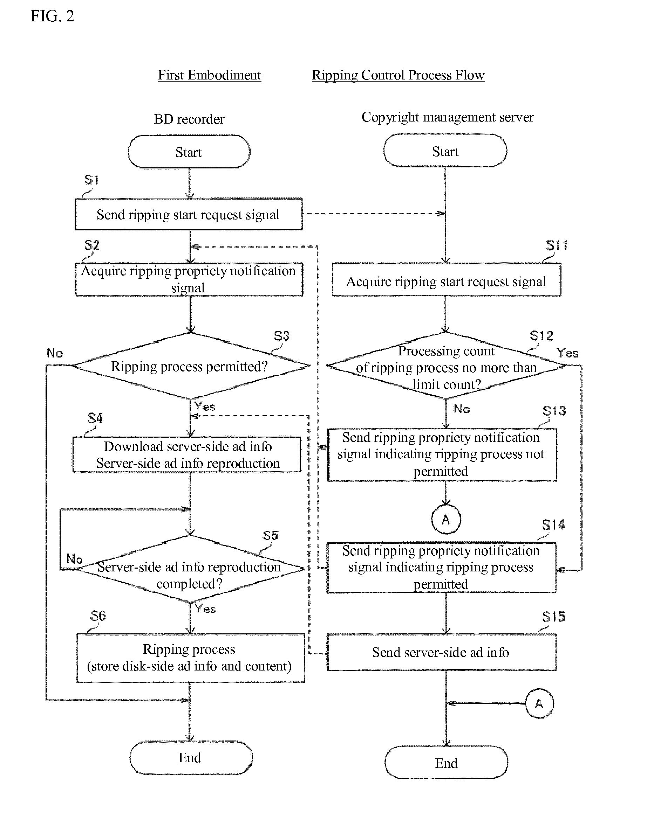

Next, a ripping control process flow of the advertisement information delivery system 100 according to one or more embodiments of the first example will be described with reference to FIG. 2. Processing in the BD recorder 1 is performed by the control unit 11. Moreover, processing in the copyright management server 4 is performed by the control unit 41.

Here, in accordance with one or more embodiments of the first example, when starting the ripping process, if the processing count of the ripping process is determined by the copyright management server 4 to be no more than the limit count of the ripping process and the ripping process is permitted by the copyright management server 4, reproduction is performed for the server-side advertisement information 22a acquired from the copyright management server 4 at the time of the ripping process. This will be described below.

First, as illustrated in FIG. 2, at step S1, in the BD recorder 1, the ripping start request signal is sent to the copyright management server 4. Afterward, the flow proceeds to step S2.

Then, at step S2, acquisition is performed of a ripping propriety notification signal, which will be described below, sent from the copyright management server 4. Afterward, the flow proceeds to step S3.

Then, at step S3, it is determined whether the ripping process is permitted. That is, if a ripping propriety notification signal is acquired indicating that the copyright management server 4 permits the ripping process, the flow proceeds to step S4, and if a ripping propriety notification signal is acquired indicating that the copyright management server 4 does not permit the ripping process, the ripping control process flow in the BD recorder 1 ends.

Furthermore, at step S4, the server-side advertisement information 22a is downloaded, and reproduction is performed for the server-side advertisement information 22a. That is, the server-side advertisement information 22a sent from the copyright management server 4 is acquired, and the acquired server-side advertisement information 22a is stored in the RAM 15a. Then, the stored server-side advertisement information 22a is read from the RAM 15a and sent to the television device 5. Then, the server-side advertisement information 22a is displayed on the display unit 53 by the television device 5. That is, the newest advertisement information (server-side advertisement information 22a) is displayed on the display unit 53 of the television device 5.

Then, at step S5, it is determined whether reproduction of the server-side advertisement information 22a is completed. This determination is repeated until reproduction of the server-side advertisement information 22a is completed, and if reproduction of the server-side advertisement information 22a is completed, the flow proceeds to step S6.

Then, at step S6, the disk-side advertisement information 22 and the content 21 are stored (ripped) from the Blu-ray Disc 2 to the hard disk drive 15 or the removable memory 3. Afterward, the ripping control process flow in the BD recorder 1 ends.

Meanwhile, in the copyright management server 4, as illustrated in FIG. 2, at step S11, acquisition is performed of the ripping start request signal sent from the BD recorder 1. Afterward, the flow proceeds to step S12.

Then, at step S12, based on the ripping start request signal, the processing count of the ripping process stored in the storage unit 42 is read and determined whether it is no more than the limit count of the ripping process. If it is not no more than the limit count of the ripping process (it exceeds the limit count), the flow proceeds to step S13, and if it is no more than the limit count of the ripping process, the flow proceeds to step S 14.

Then, at step S13, the ripping propriety notification signal indicting that the ripping process is not permitted is sent to the BD recorder 1. Afterward, the ripping control process flow in the copyright management server 4 ends.

Furthermore, at step S 14, to which the flow proceeds if the processing count is no more than the limit count of the ripping process at step S12, the ripping propriety notification signal indicating that the ripping process is permitted (or "permission information") is sent to the BD recorder 1. Afterward, the flow proceeds to step S15.

Then, at step S15, the server-side advertisement information 22a is sent to the BD recorder 1. Afterward, the ripping control process flow in the copyright management server 4 ends.

In accordance with one or more embodiments of the first example, effects such as below can be obtained.

In accordance with one or more embodiments of the first example, as above, the control unit 11 of the BD recorder 1 is configured to perform the control where, if the ripping process is permitted by the copyright management server 4, reproduction is performed for the server-side advertisement information 22a acquired from the copyright management server 4 at the time of the ripping process. As a result, if the copyright management server 4 does not permit the ripping process, the ripping process of the content 21 is not performed. As a result, the content 21 is not ripped endlessly, and the copyright of the content 21 can be protected. Moreover, because the server-side advertisement information 22a is acquired from the copyright management server 4 and reproduction thereof is performed, the user can view the new server-side advertisement information 22a. As a result, the new server-side advertisement information 22a can be viewed while protecting the copyright of the content 21.

Furthermore, in the first example, as above, the control unit 11 of the BD recorder 1 is configured to perform the control where, when starting the ripping process, if the copyright management server 4 determines that the processing count of the ripping process is no more than the limit count of the ripping process and the ripping process is permitted by the copyright management server 4, reproduction is performed for the server-side advertisement information 22a acquired from the copyright management server at the time of the ripping process. As a result, even if the ripping process is performed a plurality of times, at each time, the user can view new server-side advertisement information 22a.

Furthermore, in the first example, as above, the control unit of the BD recorder 1 is configured to perform the control where, when starting the ripping process, if the ripping process is permitted by the copyright management server 4, the newest advertisement information (server-side advertisement information 22a) is acquired from the copyright management server 4 and reproduction is performed for the acquired newest advertisement information (server-side advertisement information 22a) at the time of the ripping process. As a result, the user can view the newest advertisement information (server-side advertisement information 22a).

### (Second Example)

Next, a configuration of an advertisement information delivery system 200 according to one or more embodiments of a second example of the present invention will be described with reference to FIG. 1. In the second example, unlike the advertisement information delivery system 100 according to the first example where, at the time of the ripping process, the configuration is such that the content and the disk-side advertisement information are stored in the hard disk drive or the removable memory, a configuration is such that, at the time of the ripping process, the content and the server-side advertisement information are stored in the hard disk drive or the removable drive.

As illustrated in FIG. 1, the advertisement information delivery system 200 according to the second example includes a BD recorder 201. Moreover, the BD recorder 201 includes a control unit 211. Moreover, other configurations of the advertisement information delivery system 200 according to the second example may be similar to those of the advertisement information delivery system 100 in the first example.

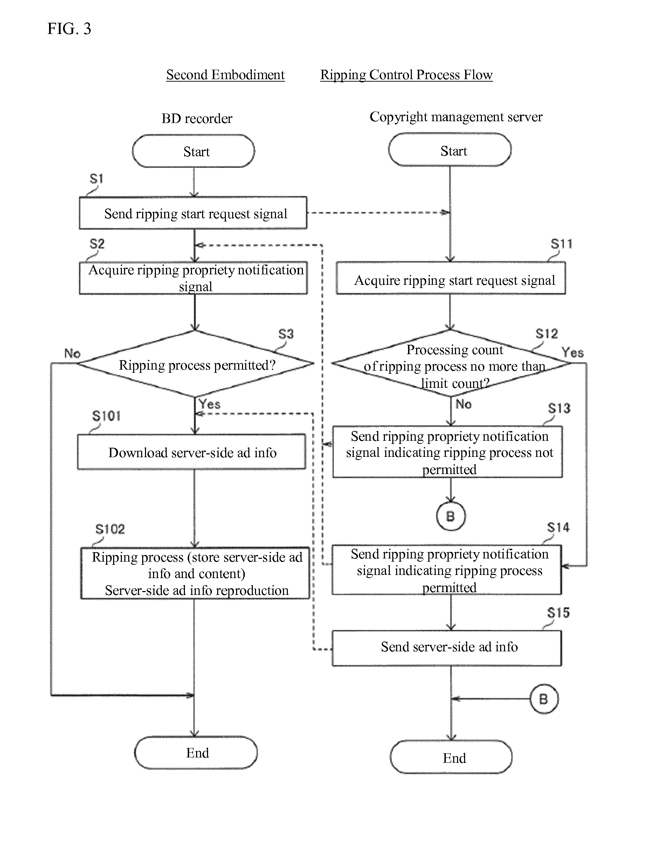

Next, a ripping control process flow of the advertisement information delivery system 200 according to one or more embodiments of the second example will be described with reference to FIG. 3. Processing in the BD recorder 201 is performed by the control unit 211. Moreover, processing in the copyright management server 4 is performed by the control unit 41.

Here, in the second example, when starting the ripping process, if the copyright management server 4 permits the ripping process, the newest advertisement information (server-side advertisement information 22a) is acquired from the copyright management server 4, and the content 21 stored in the Blu-ray Disc 2 and the acquired newest advertisement information (server-side advertisement information 22a) are stored in the hard disk drive 15 or the removable memory 3.

First, as illustrated in FIG. 3, in the BD recorder 201, at steps S1 to S3, a process similar to that at steps S1 to S3 in the ripping control process flow in the first example (see FIG. 2) is performed. Then, in the second example, at step S3, if the ripping process is permitted, the flow proceeds to step S101.

Then, at step S101, the server-side advertisement information 22a is downloaded from the copyright management server 4. That is, the server-side advertisement information 22a sent from the copyright management server 4 is acquired, and the acquired server-side advertisement information 22a is stored in the RAM 15a. Afterward, the flow proceeds to step S102.

Then, at step S102, the server-side advertisement information 22a acquired from the copyright management server 4 and the content 21 acquired from the Blu-ray Disc 2 are stored (ripped) in the hard disk drive 15 or the removable memory 3. Then, reproduction is performed for the server-side advertisement information 22a. Afterward, the ripping control process flow in the BD recorder 201 ends.

Meanwhile, in the copyright management server 4, as illustrated in FIG. 3, at steps S11 to S15, a process similar to that at steps S11 to S15 in the ripping control process flow in the first example (see FIG. 2) is performed. Afterward, the ripping control process flow in the copyright management server 4 ends.

In accordance with one or more embodiments of the second example, effects such as below can be obtained.

In accordance with one or more embodiments of the second example, as above, the content 21 and the disk-side advertisement information 22 are stored in advance in the Blu-ray Disc 2, and the control unit 211 of the BD recorder 201 is configured to perform the control where, when starting the ripping process, if the copyright management server 4 permits the ripping process, the newest advertisement information (server-side advertisement information 22a) is acquired from the copyright management server 4 and the content 21 stored in the Blu-ray Disc 2 and the acquired newest advertisement information (server-side advertisement information 22a) are stored in the hard disk drive 15 or the removable memory 3. As a result, the disk-side advertisement information 22 stored in the Blu-ray Disc 2 can be replaced with the newest advertisement information (server-side advertisement information 22a) and stored in the hard disk drive 15 or the removable memory 3. As a result, the user can easily view the newest advertisement information (server-side advertisement information 22a). Moreover, other effects of the advertisement information delivery system 200 according to the second example may be similar to those of the advertisement information delivery system 100 in the first example.

### (Third Example)

Next, a configuration of an advertisement information delivery system 300 according to one or more embodiments of a third example of the present invention will be described with reference to FIG. 1. In the third example, unlike the advertisement information delivery system 100 according to the first example where, at the time of the ripping process, the configuration is such that the content and the disk-side advertisement information are stored in the hard disk drive or the removable memory, a configuration is such that, when starting reproduction of the content, a control is performed to reproduce, by streaming, the server-side advertisement information from the copyright management server.

As illustrated in FIG. 1, the advertisement information delivery system 300 according to the third example includes a BD recorder 301 and a copyright management server 304. Moreover, the BD recorder 301 includes a control unit 311. Moreover, the copyright management server 304 includes a control unit 341. Moreover, other configurations of the advertisement information delivery system 300 according to the third example may be similar to those of the advertisement information delivery system 100 in the first example.

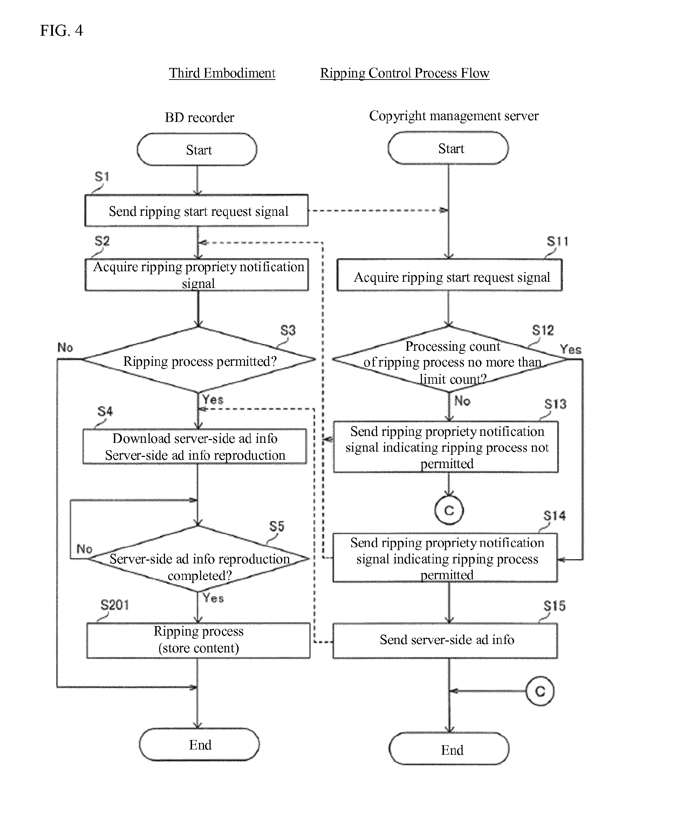

Next, a ripping control process flow of the advertisement information delivery system 300 according to one or more embodiments of the third example will be described with reference to FIG. 4. Processing in the BD recorder 301 is performed by the control unit 311. Moreover, processing in the copyright management server 304 is performed by the control unit 341.

First, as illustrated in FIG. 4, in the BD recorder 301, at steps S1 to S5, a process similar to that at steps S1 to S5 in the ripping control process flow in the first example (see FIG. 2) is performed. Then, in the third example, after the process at step S5, the flow proceeds to step S201.

Then, at step S201, the content 21 acquired from the Blu-ray Disc 2 is stored (ripped) in the hard disk drive 15 or the removable memory 3. That is, in the third example, at the time of the ripping process, the disk-side advertisement information 22, unlike the ripping control process according to the first example, is not stored in the hard drive disk 15 or the removable memory 3. Afterward, the ripping control process flow in the BD recorder 301 ends.

Meanwhile, in the copyright management server 304, as illustrated in FIG. 4, at steps S11 to S15, a process similar to that at steps S11 to S15 in the ripping control process flow in the first example (see FIG. 2) is performed. Afterward, the ripping control process flow in the copyright management server 304 ends.

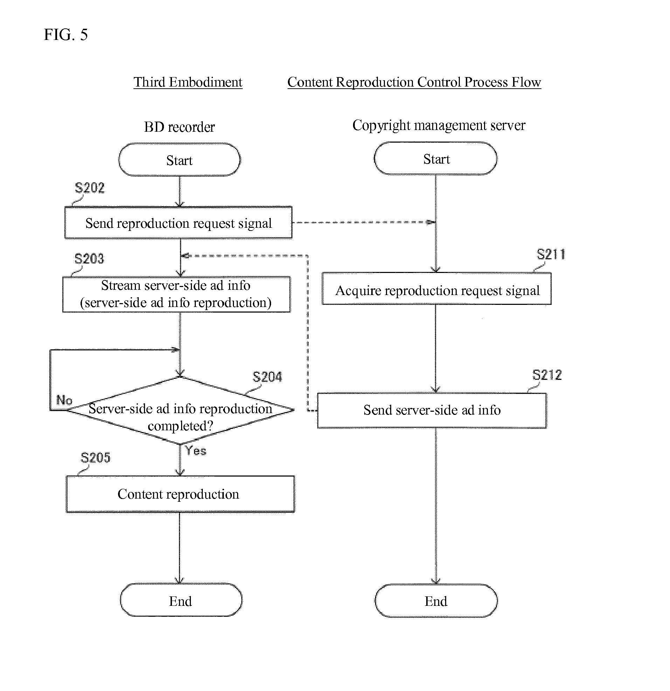

Next, a content reproduction control process flow of the advertisement information delivery system 300 according to the third example will be described with reference to FIG. 5. Processing in the BD recorder 301 is performed by the control unit 311. Moreover, processing in the copyright management server 304 is performed by the control unit 341. Moreover, the content reproduction control process of the advertisement information delivery system 300 is executed after the ripping control process of the advertisement information delivery system 300 described above (see FIG. 4).

First, as illustrated in FIG. 5, in the BD recorder 301, at step S202, the reproduction request signal is sent to the copyright management server 304. Afterward, the flow proceeds to step S203.

Then, at step S203, the server-side advertisement information 22a is streamed from the copyright management server 304, and reproduction is performed for the server-side advertisement information 22a. That is, reproduction is performed for the server-side advertisement information 22a while temporarily storing the server-side advertisement information 22a sent from the copyright management server 304 in the RAM 15a. Afterward, the flow proceeds to step S204.

Then, at step S204, it is determined whether reproduction of the server-side advertisement information 22a is completed. This determination is repeated until reproduction of the server-side advertisement information 22a is completed, and if reproduction of the server-side advertisement information 22a is completed, the flow proceeds to step S205.

Then, at step S205, reproduction of the content 21 is performed. That is, the content 21 stored in the hard disk drive 15 or the removable memory 3 is read and sent to the television device 5. Then, the content 21 is displayed on the display unit 53 of the television device 5. Afterward, the content reproduction control process flow in the BD recorder 301 ends.

Meanwhile, in the copyright management server 304, as illustrated in FIG. 5, at step S211, acquisition is performed of the reproduction request signal sent from the BD recorder 301. Afterward, the flow proceeds to step S212.

Then, at step S212, the server-side advertisement information 22a is sent to the BD recorder 301. Afterward, the content reproduction control process flow in the copyright management server 304 ends.

In accordance with one or more embodiments of the third example, effects such as below can be obtained.

In accordance with one or more embodiments of the third example, as above, the control unit 311 of the BD recorder 301 is configured to perform a control where, at the time of the ripping process, the disk-side advertisement information 22 is not stored in the hard disk drive 15 or the removable memory 3 and, when starting reproduction of the content 21, the server-side advertisement information 22a is streamed from the copyright management server 304 to perform reproduction thereof. As a result, a usage capacity of the hard disk drive 15 or the removable memory 3 for the ripping process can be reduced by an extent of the disk-side advertisement information 22 not being stored in the hard disk drive 15 or the removable memory 3. Moreover, other effects of the advertisement information delivery system 300 according to the third example may be similar to those of the advertisement information delivery system 100 in the first example.

### (Fourth Example)

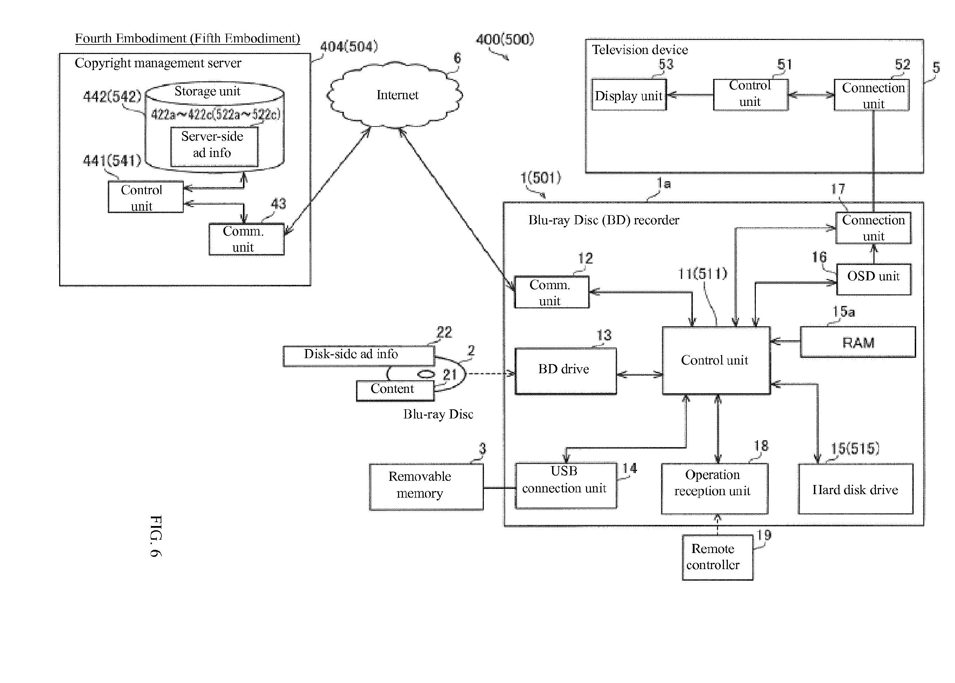

Next, a configuration of an advertisement information delivery system 400 according to one or more embodiments of a fourth example of the present invention will be described with reference to FIG. 6. In the fourth example, a plurality of server-side advertisement information with mutually different content is stored in advance in the storage unit of the copyright management server, and the control unit of the copyright management server is configured to perform a control where server-side advertisement information based on content information of the content ripped by the BD recorder and the processing count of the ripping process among the plurality of server-side advertisement information is sent to the BD recorder.

As illustrated in FIG. 6, the advertisement information delivery system 400 according to one or more embodiments of the fourth example includes the BD recorder 1 and a copyright management server 404. Moreover, the copyright management server 404 includes a control unit 441 and a storage unit 442. The BD recorder 1 is configured similarly to the BD recorder 1 according to the first example.

Here, in the fourth example, a plurality of server-side advertisement information 422a to 422c with mutually different content is stored in advance in the storage unit 442 of the copyright management server 404. Moreover, content information of a content (including the content 21) of each commercially-available BD recorder (including the BD recorder 1) and the processing count of the ripping process of the content (including the content 21) are stored in the storage unit 442. Moreover, the control unit 441 of the copyright management server 404 is configured to select which among the server-side advertisement information 422a to 422c to send based on the content information of the content and the processing count of the ripping process relating to the BD recorder 1 when sending the server-side advertisement information (any of the server-side advertisement information 422a to 422c) from the copyright management server 404 to the BD recorder 1.

For example, the content of the server-side advertisement information 422a is an advertisement relating to maker A, the content of the server-side advertisement information 422b is an advertisement relating to maker B, and the content of the server-side advertisement information 422c is an advertisement relating to maker C. In this situation, the control unit 441 of the copyright management server 404 is configured to perform a control where, if the content of maker A has the greatest processing count of the ripping process among the content ripped by the BD recorder 1, the server-side advertisement information 422a is selected, and the server-side advertisement information 422a is sent to the BD recorder 1. Moreover, other configurations of the advertisement information delivery system 400 according to the fourth example may be similar to those of the advertisement information delivery system 100 in the first example.

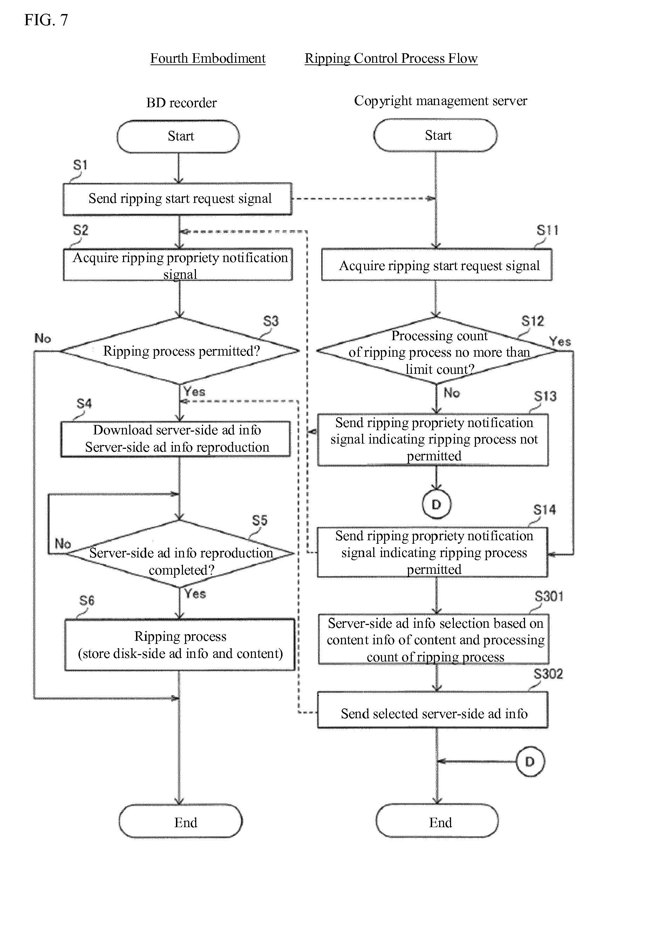

Next, a ripping control process flow of the advertisement information delivery system 400 according to one or more embodiments of the fourth example will be described with reference to FIG. 7. Processing in the BD recorder 1 is performed by the control unit 11. Moreover, processing in the copyright management server 404 is performed by the control unit 441.

First, as illustrated in FIG. 7, in the BD recorder 1, at steps S1 to S6, a process similar to that at steps S1 to S6 in the ripping control process flow in the first example (see FIG. 2) is performed.

Meanwhile, in the copyright management server 404, as illustrated in FIG. 7, at steps S11 to S14, a process similar to that at steps S11 to S 14 in the ripping control process flow in the first example (see FIG. 2) is performed. Then, in the fourth example, after step S14, the flow proceeds to step S301.

Then, at step S301, selection is performed of the server-side advertisement information (any of the server-side advertisement information 422a to 422c) based on the content information of the content ripped by the BD recorder 1 and the processing count of the ripping process from among the plurality of server-side advertisement information 422a to 422c. Afterward, the flow proceeds to step S302.

Then, at step S302, the selected server-side advertisement information (any of the server-side advertisement information 422a to 422c) is sent to the BD recorder 1. Afterward, the ripping control process flow in the copyright management server 404 ends.

In accordance with one or more embodiments of the fourth example, effects such as below can be obtained.

In accordance with one or more embodiments of the fourth example, as above, the plurality of server-side advertisement information 422a to 422c with mutually different content is stored in advance in the storage unit 442 of the copyright management server 404, and the control unit 441 of the copyright management server 404 is configured to perform the control where the server-side advertisement information (any of the server-side advertisement information 422a to 422c) based on the content information of the content ripped by the BD recorder 1 and the processing count of the ripping process among the plurality of server-side advertisement information 422a to 422c is sent to the BD recorder 1. Here, it is thought that a preferred content of the user comes to have a large ripping processing count. Therefore, as above, because the server-side advertisement information based on the content information of the ripping-processed content and the processing count of the ripping process from among the plurality of server-side advertisement information 422a to 422c is sent to the BD recorder 1, the BD recorder 1 can acquire server-side advertisement information suiting the taste of the user. Moreover, other effects of the advertisement information delivery system 400 according to the fourth example may be similar to those of the advertisement information delivery system 100 in the first example.

### (Fifth Example)

Next, a configuration of an advertisement information delivery system 500 according to one or more embodiments of a fifth example of the present invention will be described with reference to FIG. 6. In accordance with one or more embodiments of the fifth example, the plurality of server-side advertisement information with mutually different content is stored in advance in the storage unit of the copyright management server. Moreover, the control unit of the BD recorder is configured to perform a control where ripping history information and reproduction count information are sent to the copyright management server and server-side advertisement information based on the ripping history information and the reproduction count information from among the plurality of server-side advertisement information is acquired.

As illustrated in FIG. 6, the advertisement information delivery system 500 according to one or more embodiments of the fifth example includes a BD recorder 501 and a copyright management server 504.

Here, in the fifth example, the BD recorder 501 includes a hard disk drive 515 and control unit 511. The hard disk drive 515 stores the ripping history information, which is history information relating to the content of the content ripped thus far by the BD recorder 501, and the reproduction count information, which is information of a reproduction count of the ripping-processed content.

The control unit 511 is configured to perform a control of reading and sending to the copyright management server 504 the ripping history information and the reproduction count information stored in the hard disk drive 515.

Furthermore, as illustrated in FIG. 6, the copyright management server 504 includes a storage unit 542 and control unit 541. A plurality of server-side advertisement information 522a to 522c with mutually different content is stored in the storage unit 542.

The control unit 541 is configured to perform a control of acquiring the ripping history information and the reproduction count information from the BD recorder 501 when sending the server-side advertisement information (any of the server-side advertisement information 522a to 522c) from the copyright management server 504 to the BD recorder 501 and of sending the server-side advertisement information (any of the server-side advertisement information 522a to 522c) based on the acquired ripping history information and the reproduction count information.

For example, the content of the server-side advertisement information 522a is an advertisement of a content relating to genre A, the content of the server-side advertisement information 522b is an advertisement of a content relating to genre B, and the content of the server-side advertisement information 522c is an advertisement of a content relating to genre C. In this situation, the control unit 541 of the copyright management server 504, based on the acquired ripping history information, determines which genre content is the most numerous among the contents ripped by the BD recorder 501. For example, if the content of genre A is the most numerous, the control unit 541 is configured to perform a control of selecting the server-side advertisement information 522a and sending the server-side advertisement information 522a to the BD recorder 501.

Furthermore, if genre A, genre B, and genre C are identical in number, the control unit 541 of the copyright management server 504 is configured to select the server-side advertisement information relating to the genre with the greatest reproduction count from among genre A, genre B, and genre C based on the acquired reproduction count information. For example, the control unit 541 is configured to perform a control where, if the content of genre A has the greatest reproduction count, the server-side advertisement information 522a is selected and the server-side advertisement information 522a is sent to the BD recorder 501. Moreover, other configurations of the advertisement information delivery system 500 according to the fifth example may be similar to that of the advertisement information delivery system 100 in the first example.

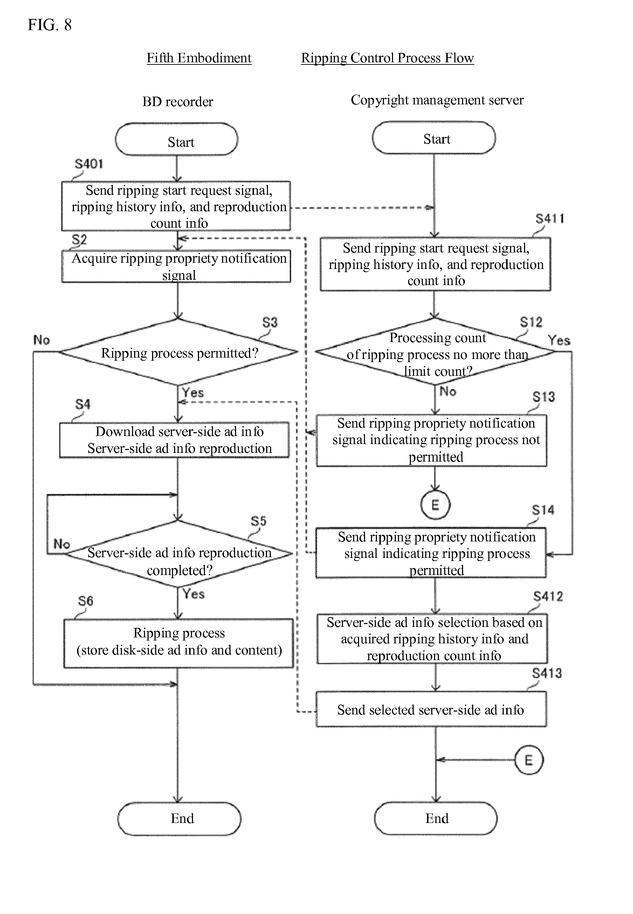

Next, a ripping control process flow of the advertisement information delivery system 500 according to one or more embodiments of the fifth example will be described with reference to FIG. 8. Processing in the BD recorder 501 is performed by the control unit 511. Moreover, processing in the copyright management server 504 is performed by the control unit 541.

First, as illustrated in FIG. 8, in the BD recorder 501, at step S401, the ripping start request signal, the ripping history information, and the reproduction count information are sent to the copyright management server 504. Afterward, the flow proceeds to step S2.

Then, at steps S2 to S6, a process similar to that at steps S2 to S6 in the ripping control process flow in the first example (see FIG. 2) is performed. Afterward, the ripping control process flow by the BD recorder 501 ends.

Meanwhile, in the copyright management server 504, as illustrated in FIG. 8, at step S411, acquisition is performed of the ripping start request signal, the ripping history information, and the reproduction count information sent from the BD recorder 501. Afterward, the flow proceeds to step S12.

Then, at steps S12 to S14, a process similar to that at steps S12 to S14 in the ripping control process flow in the first example (see FIG. 2) is performed. Then, in the fifth example, after step S14, the flow proceeds to step S412.

Then, at step S412, selection is performed of the server-side advertisement information (any of the server-side advertisement information 522a to 522c) based on the ripping history information and the reproduction count information from among the plurality of server-side advertisement information 522a to 522c. Afterward, the flow proceeds to step S413.

Then, at step S413, the selected server-side advertisement information (any of the server-side advertisement information 522a to 522c) is sent to the BD recorder 501. Afterward, the ripping control process flow in the copyright management server 504 ends.

In accordance with one or more embodiments of the fifth example, effects such as below can be obtained.

In accordance with one or more embodiments of the fifth example, as above, the plurality of server-side advertisement information 522a to 522c with mutually different content is stored in advance in the storage unit 542 of the copyright management server 504. Moreover, the control unit 511 of the BD recorder 501 is configured to perform a control where at least the ripping history information, which is the history information relating to the content of the content ripped thus far, or the reproduction count information, which is the information of the reproduction count of the ripping-processed content, is sent to the copyright management server 504 and the server-side advertisement information (any of the server-side advertisement information 522a to 522c) based on at least the ripping history information or the reproduction count information in the plurality of server-side advertisement information 522a to 522c is acquired from the copyright management server 504. Here, it is thought that the preferred content of the user comes to have a large ripping processing count and reproduction count. Therefore, by a configuration such as above, server-side advertisement information (any of the server-side advertisement information 522a to 522c) suiting the taste of the user can be acquired. Moreover, other effects of the advertisement information delivery system 500 according to the fifth example may be similar to those of the advertisement information delivery system 100 in the first example.

### (Sixth Example)

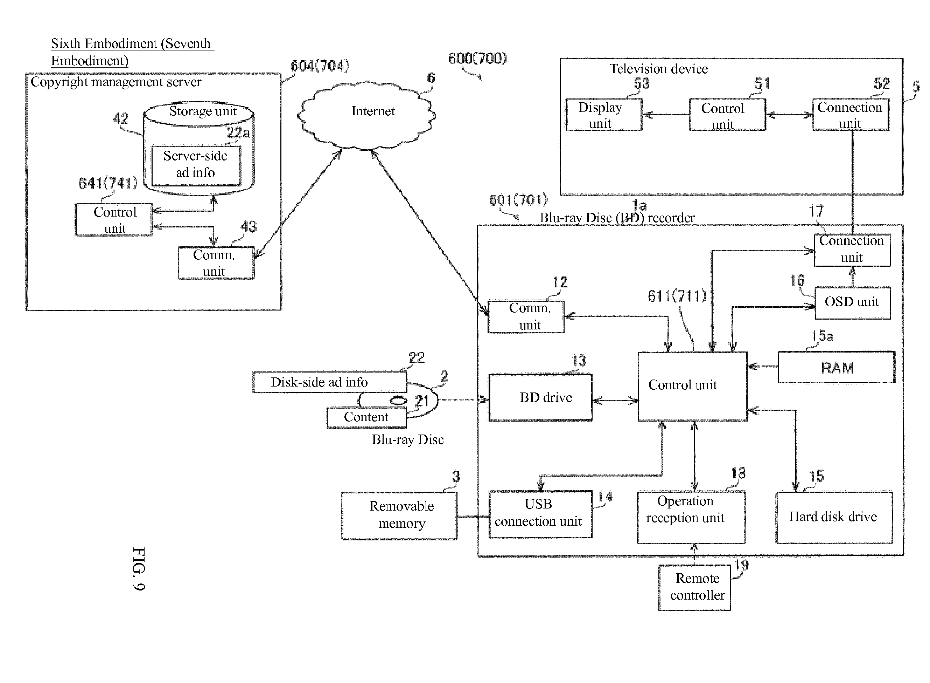

Next, a configuration of an advertisement information delivery system 600 according to one or more embodiments of a sixth example of the present invention will be described with reference to FIG. 9. One or more embodiments of the sixth example are configured to perform a control where the remaining amount information of the storage capacity of the hard disk drive or the removable memory is sent to the copyright management server and the server-side advertisement information having a capacity corresponding to the remaining amount information is acquired from the copyright management server.

As illustrated in FIG. 9, the advertisement information delivery system 600 according to the sixth example includes a BD recorder 601 and a copyright management server 604. Moreover, the BD recorder 601 includes a control unit 611, and the copyright management server 604 includes a control unit 641. Moreover, other configurations of the advertisement information delivery system 600 according to the sixth example may be similar to those of the advertisement information delivery system 100 in the first example.

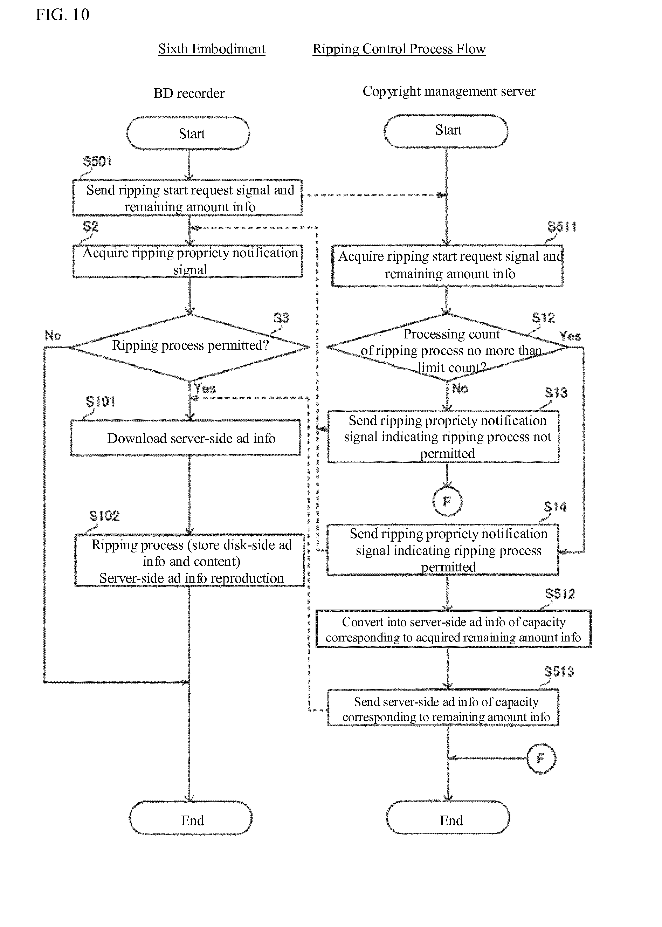

Next, a ripping control process flow of the advertisement information delivery system 600 according to one or more embodiments of the sixth example will be described with reference to FIG. 10. Processing in the BD recorder 601 is performed by the control unit 611. Moreover, processing in the copyright management server 604 is performed by the control unit 641.

Here, in the sixth example, the remaining amount information of the storage capacity of the hard disk drive 15 or the removable memory 3 is sent from the BD recorder 601 to the copyright management server 604, and server-side advertisement information 22a having a capacity corresponding to the remaining amount information is sent from the copyright management server 604 to the BD recorder 601. This will be described below.

First as illustrated in FIG. 10, in the BD recorder 601, at step S501, the remaining amount information of the storage capacity of the hard disk drive 15 or the removable memory 3 and the ripping start request signal are sent to the copyright management server 604. Afterward, the flow proceeds to step S2.

Then, at steps S2 and S3, a process similar to that at steps S2 and S3 in the ripping control process flow in the first example (see FIG. 2) is performed. Afterward, the flow proceeds to step S101.

Then, at steps S101 and S102, a process similar to that at steps S101 and S102 in the ripping control process flow in the second example (see FIG. 3) is performed. That is, the server-side advertisement information 22a having the capacity corresponding to the remaining amount information, which will be described below, is stored in the hard disk drive 15 or the removable memory 3. Afterward, the ripping control process flow by the BD recorder 601 ends.

Meanwhile, in the copyright management server 604, as illustrated in FIG. 10, at step S511, acquisition is performed of the remaining amount information of the storage capacity of the hard disk drive 15 or the removable memory 3 and the ripping start request signal sent from the BD recorder 601. Afterward, the flow proceeds to step S12.

Then, at steps S12 to S14, a process similar to that at steps S12 to S 14 in the ripping control process flow in the first example (see FIG. 2) is performed. Then, in the sixth example, after step S14, the flow proceeds to step S512.

Then, at step S512, the server-side advertisement information 22a is converted into the server-side advertisement information 22a having the capacity corresponding to the remaining amount information. For example, if the remaining amount is small, by lowering an image quality of the server-side advertisement information 22a, conversion is performed to the capacity corresponding to the remaining amount information while preserving the content to be identical to that of the server-side advertisement information 22a before conversion. Afterward, the flow proceeds to step S513.

Then, at step S513, the server-side advertisement information 22a having the capacity corresponding to the remaining amount information is sent to the BD recorder 601. Afterward, the ripping control process flow in the copyright management server 604 ends.

In accordance with one or more embodiments of the sixth example, effects such as below can be obtained.

In accordance with one or more embodiments of the sixth example, as above, the control unit 611 of the BD recorder 601 is configured to perform the control where the remaining amount information of the storage capacity of the hard disk drive 15 or the removable memory 3 is sent to the copyright management server 604 and the server-side advertisement information 22a having the capacity corresponding to the remaining amount information is acquired from the copyright management server 604. As a result, even if the remaining amount of the storage capacity of the hard disk drive 15 or the removable memory 3 is small, by lowering the image quality of the server-side advertisement information 22a, the server-side advertisement information 22a can be acquired from the copyright management server 604. Moreover, other effects of the advertisement information delivery system 600 according to the sixth example may be similar to those of the advertisement information delivery system 100 in the first example.

### (Seventh Example)

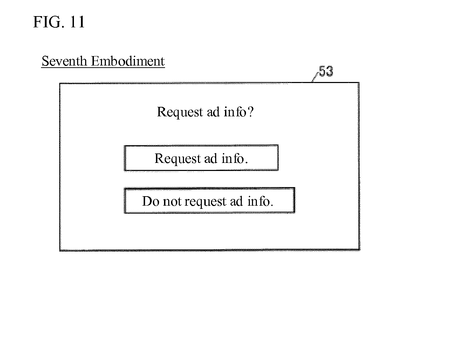

Next, a configuration of an advertisement information delivery system 700 according to one or more embodiments of a seventh example of the present invention will be described with reference to FIGS. 9 and 11. One or more embodiments of the seventh example are configured to perform a control where, at the time of the ripping process, based on a selected operation by the user, it is determined whether to acquire the advertisement information from the copyright management server.

As illustrated in FIG. 9, the advertisement information delivery system 700 according to the seventh example includes a BD recorder 701 and a copyright management server 704. Moreover, the BD recorder 701 includes a control unit 711, and the copyright management server 704 includes a control unit 741.

Here, in the seventh example, as illustrated in FIG. 11, the control unit 711 of the BD recorder 701 is configured to perform a control where, at the time of the ripping process, a display is output from the OSD unit 16 to the user prompting determination of whether to request the server-side advertisement information 22a. Moreover, the control unit 51 of the television device 5 is configured to perform a control where the display output from the BD recorder 701 prompting determination of whether to request the server-side advertisement information 22a is acquired and displayed on the display unit 53.

For example, as illustrated in FIG. 11, the display prompting determination of whether to request the server-side advertisement information 22a provides a display of "Request advertisement information?" and operation unit displays of "Request advertisement information." and "Do not request advertisement information." Moreover, based on the selected operation by the remote controller 19 by the user, the control unit 711 is configured to perform a control of determining whether to acquire the server-side advertisement information 22a from the copyright management server 704. Moreover, other configurations of the advertisement information delivery system 700 according to the seventh example may be similar to those of the advertisement information delivery system 100 in the first example.

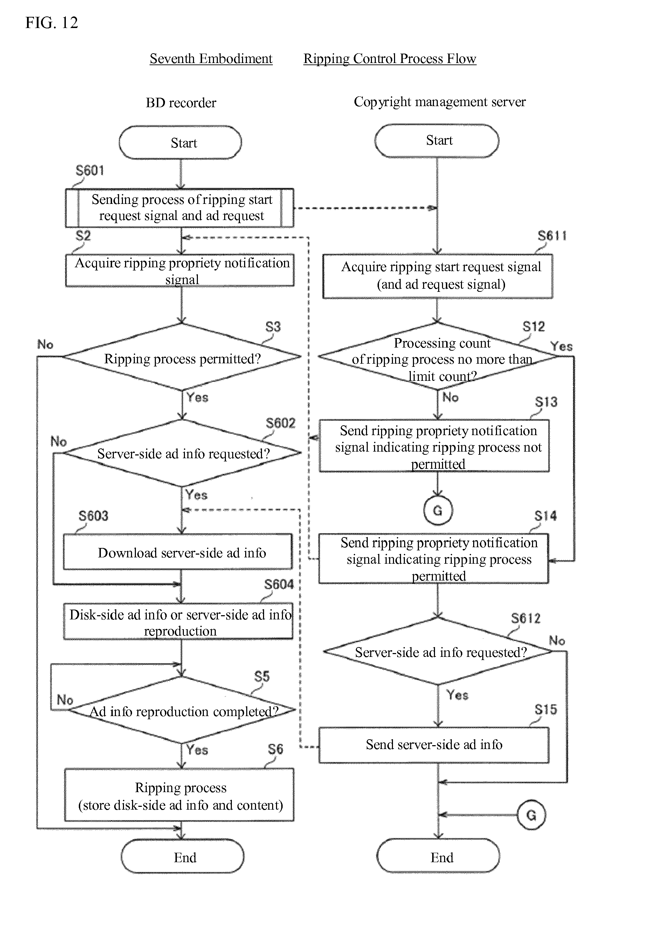

Next, a ripping control process flow of the advertisement information delivery system 700 according to the one or more embodiments of seventh example will be described with reference to FIG. 12. Processing in the BD recorder 701 is performed by the control unit 711. Moreover, processing in the copyright management server 704 is performed by the control unit 741.

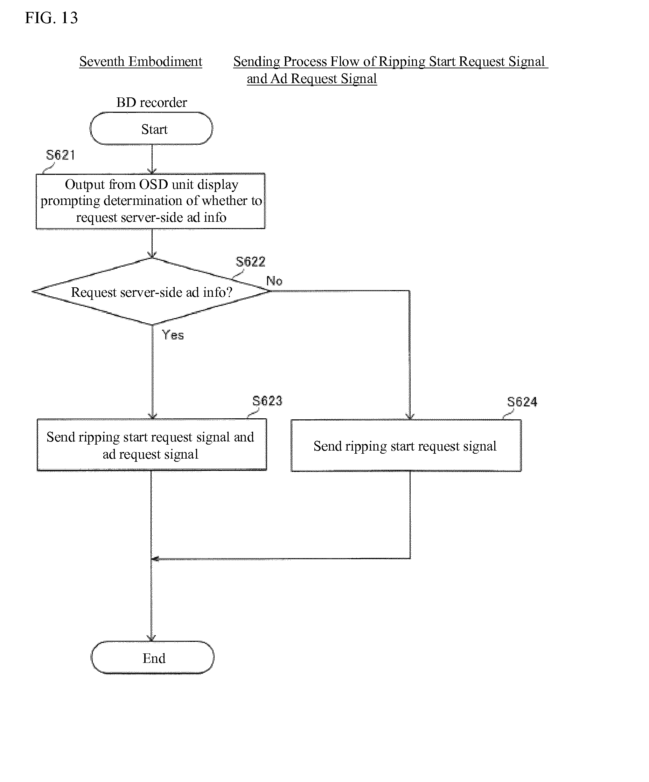

First, as illustrated in FIG. 12, in the BD recorder 701, at step S601, sending processing of the ripping start request signal and an advertisement request signal (see FIG. 13) is performed. Afterward, the flow proceeds to step S2.

Then, at steps S2 and S3, a process similar to that at steps S2 and S3 in the ripping control process flow in the first example (see FIG. 2) is performed. Afterward, the flow proceeds to step S602.

Then, at step S602, it is determined whether the server-side advertisement information 22a is requested. If the server-side advertisement information 22a is requested, the flow proceeds to step S603, and if the server-side advertisement information 22a is not requested, the flow proceeds to step S604.

Then, at step S603, the server-side advertisement information 22a is acquired from the copyright management server 704, and the server-side advertisement information 22a is stored in the hard disk drive 15 or the removable memory 3. Afterward, the flow proceeds to step S604.

Then, at step S604, if the server-side advertisement information 22a is acquired at step S603, reproduction is performed for the server-side advertisement information 22a, and if the flow proceeds from step S602 to step S604 without passing through step S603, reproduction is performed for the disk-side advertisement information 22. Afterward, the flow proceeds to step S5.

Then, at steps S5 and S6, a process similar to that at steps S5 and S6 in the ripping control process flow in the first example (see FIG. 2) is performed. Afterward, the ripping control process flow in the BD recorder 701 ends.

Meanwhile, in the copyright management server 704, as illustrated in FIG. 12, at step S611, acquisition is performed of the ripping start request signal and the advertisement request signal. Afterward, the flow proceeds to step S12.

Then, at steps S12 to S14, a process similar to that at steps S12 to S14 in the ripping control process flow in the first example (see FIG. 2) is performed. Then, in the seventh example, after step S14, the flow proceeds to step S612.

Then, at step S612, it is determined whether the server-side advertisement information 22a is requested. That is, it is determined whether the advertisement request signal, which will be described below, is acquired. If the advertisement request signal is acquired, the flow proceeds to step S 15, and if the advertisement request signal is not acquired, afterward, the ripping control process flow in the copyright management server 704 ends. That is, if the server-side advertisement information 22a is not requested from the BD recorder 701, the server-side advertisement information 22a is not sent to the BD recorder 701.

Next, a sending process flow of the ripping start request signal and the advertisement request signal of the advertisement information delivery system 700 according to one or more embodiments of the seventh example will be described with reference to FIG. 13. Processing in the BD recorder 701 is performed by the control unit 711.

First, at step S621, the display prompting determination of whether to request the server-side advertisement information 22a (see FIG. 11) is output from the OSD unit 16. Afterward, the flow proceeds to step S622.

Then, in the seventh example, at step S622, it is determined whether to request the server-side advertisement information 22a from the copyright management server 704. That is, a selected operation content by the user is determined. If the server-side advertisement information 22a is requested from the copyright management server 704, the flow proceeds to step S623, and if the server-side advertisement information 22a is not requested from the copyright management server 704, the flow proceeds to step S624.

Then, at step S623, the ripping start request signal and the advertisement request signal are sent to the copyright management server 704. Afterward, the sending process flow of the ripping start request signal and the advertisement request signal in the BD recorder 701 ends.

Furthermore, at step S624, to which the flow proceeds if the server-side advertisement information 22a is not requested from the copyright management server 704 at step S622, the ripping start request signal is sent to the copyright management server 704. Afterward, the sending process flow of the ripping start request signal and the advertisement request signal in the BD recorder 701 ends.

In accordance with one or more embodiments of the seventh example, effects such as below can be obtained.

In accordance with one or more embodiments of the seventh example, as above, the control unit 711 of the BD recorder 701 is configured to perform the control where, at the time of the ripping process, based on the selected operation by the user using the remote controller 19, it is determined whether to acquire the server-side advertisement information 22a from the copyright management server 704. As a result, the server-side advertisement information 22a can be acquired from the copyright management server 704 according to a need of the user. For example, to omit a time required to acquire the server-side advertisement information 22a, acquiring the server-side advertisement information 22a from the copyright management server 704 can be rejected. Moreover, other effects of the advertisement information delivery system 700 according to the seventh example may be similar to those of the advertisement information delivery system 100 in the first example.

### (Eighth Example)

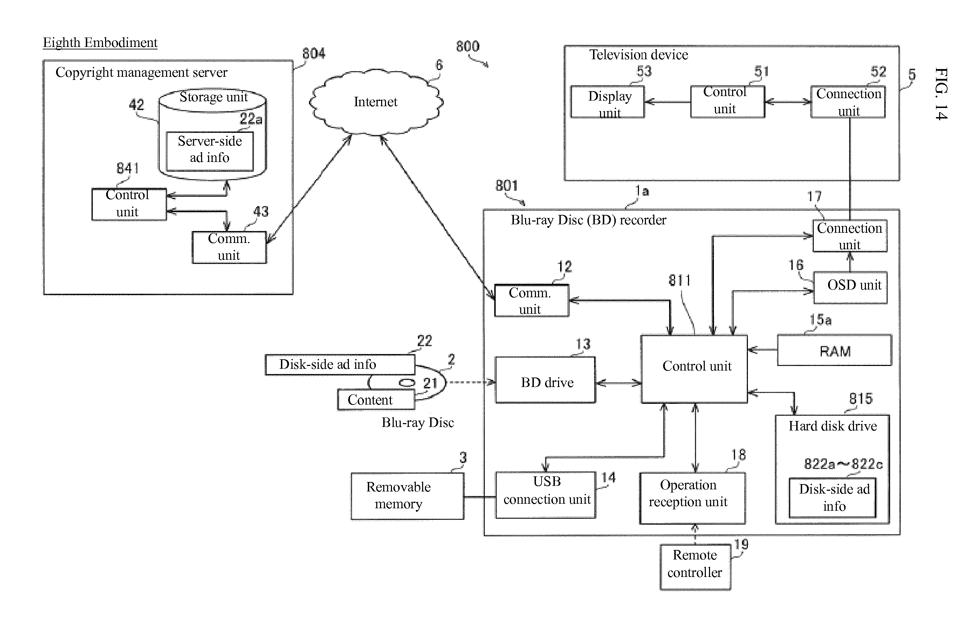

Next, a configuration of an advertisement information delivery system 800 according to one or more embodiments of an eighth example of the present invention will be described with reference to FIG. 14. One or more embodiments of the eighth example are configured so if a content of the newest server-side advertisement information and the content of the disk-side advertisement information stored in the hard disk drive or the removable memory match, the newest server-side advertisement information is not sent from the copyright management server, and if the newest server-side advertisement information and the disk-side advertisement information stored in the hard disk drive or the removable memory do not match, the newest server-side advertisement information is sent from the copyright management server.

As illustrated in FIG. 14, the advertisement information delivery system 800 according to one or more embodiments of the eighth example includes a BD recorder 801 and a copyright management server 804. Moreover, the BD recorder 801 includes a control unit 811 and a hard disk drive 815, and the copyright management server 804 includes a control unit 841.

As illustrated in FIG. 14, in the hard disk drive 815 of the BD recorder 801, disk-side advertisement information 822a to 822c are stored due to the ripping processes thus far. Moreover, the disk-side advertisement information 822a to 822c are each configured to have identification information corresponding to a content thereof. Moreover, the control unit 811 of the BD recorder 801 is configured to perform a control where, at the time of the ripping process, advertisement data information including the identification information of the disk-side advertisement information 822a to 822c stored in the hard disk drive 815 is sent to the copyright management server 804. Moreover, other configurations of the advertisement information delivery system 800 according to the eighth example may be similar to those of the advertisement information delivery system 100 in the first example.

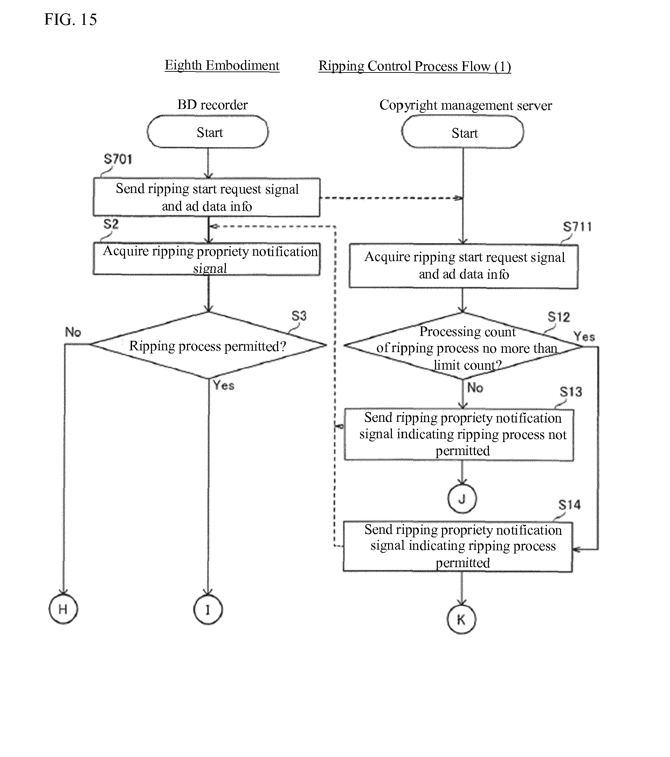

Next, a ripping control process flow of the advertisement information delivery system 800 according to one or more embodiments of the eighth example will be described with reference to FIG. 15. Processing in the BD recorder 801 is performed by the control unit 811. Moreover, processing in the copyright management server 804 is performed by the control unit 841.

First, as illustrated in FIG. 15, in the BD recorder 801, at step S701, sending is performed of the ripping start request signal and the advertisement data information. Afterward, the flow proceeds to step S2.

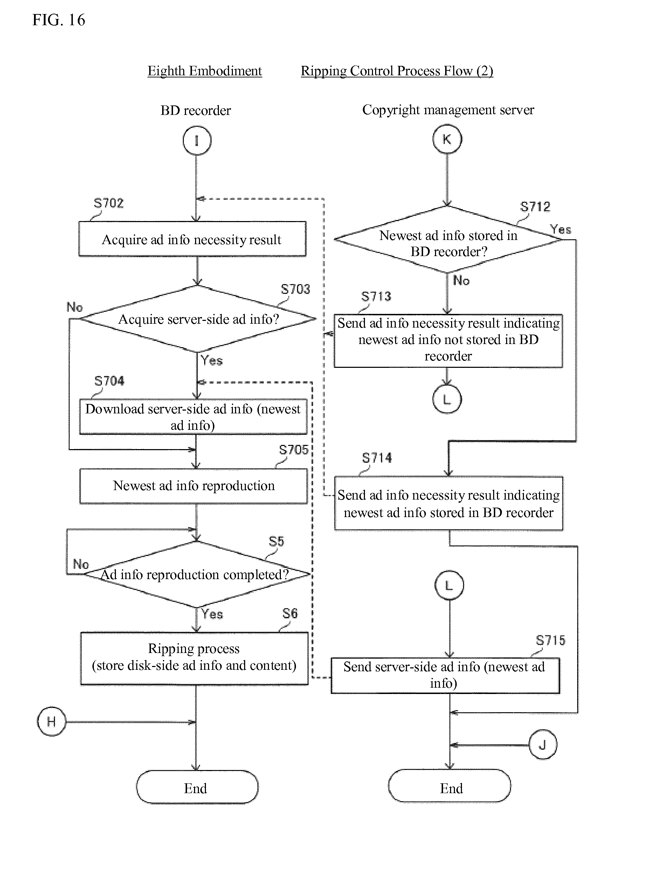

Then, at steps S2 and S3, a process similar to that at steps S2 and S3 in the ripping control process flow in the first example (see FIG. 2) is performed. Afterward, the flow proceeds to step S702 (see FIG. 16).

Meanwhile, in the copyright management server 804, as illustrated in FIG. 15, at step S711, acquisition is performed of the ripping start request signal and the advertisement data information. Afterward, the flow proceeds to step S12.

Then, at steps S12 to S14, a process similar to that at steps S12 to S14 in the ripping control process flow in the first example (see FIG. 2) is performed. Then, in the eighth example, after step S14, the flow proceeds to step S712 (see FIG. 16).

Then, as illustrated in FIG. 16, in the BD recorder 801, at step S702, acquisition is performed of an advertisement information necessity result sent from the copyright management server 804. That is, acquisition is performed of a result (advertisement information necessity result) of whether disk-side advertisement information of the same content as the server-side advertisement information 22a (newest advertisement information) is stored in the BD recorder 801. Afterward, the flow proceeds to step S703.

Then, at step S703, it is determined based on the advertisement information necessity result whether to acquire the server-side advertisement information from the copyright management server 804. If the server-side advertisement information is sent from the copyright management server 804, the flow proceeds to step S704, and if the server-side advertisement information is not sent from the copyright management server 804, the flow proceeds to step S705.

Then, at step S704, downloading is performed of the server-side advertisement information 22a sent from the copyright management server 804. Afterward, the flow proceeds to step S705.

Then, at step S705, reproduction is performed for the newest advertisement information. Afterward, the flow proceeds to step S5.

Then, at steps S5 and S6, a process similar to that at steps S5 and S6 in the ripping control process flow in the first example (see FIG. 2) is performed. Afterward, the ripping control process flow in the BD recorder 801 ends.

Meanwhile, in the copyright management server 804, as illustrated in FIG. 16, at step S712, a determination is performed of whether the disk-side advertisement information of the same content as the server-side advertisement information 22a (newest advertisement information) is stored in the BD recorder 801. That is, based on the advertisement data information, it is determined whether the newest advertisement information is included in the disk-side advertisement information 822a to 822c. If the disk-side advertisement information of the same content as the newest advertisement information is stored, the flow proceeds to step S714, and if the disk-side advertisement information of the same content as the newest advertisement information is not stored, the flow proceeds to step S713.

Then, at step S713, an advertisement information necessity result indicating that the disk-side advertisement information of the same content as the server-side advertisement information 22a (newest advertisement information) is not stored in the BD recorder 801 is sent to the BD recorder 801. Afterward, the flow proceeds to step S715.

Then, at step S714, an advertisement information necessity result indicating that the disk-side advertisement information of the same content as the server-side advertisement information 22a (newest advertisement information) is stored in the BD recorder 801 is sent to the BD recorder 801. Afterward, the ripping control process flow in the copyright management server 804 ends.

Then, at step S715, the server-side advertisement information 22a (newest advertisement information) is sent to the BD recorder 801. Afterward, the ripping control process flow in the copyright management server 804 ends.

In accordance with one or more embodiments of the eighth example, effects such as below can be obtained.

In accordance with one or more embodiments of the eighth example, as above, the control unit 811 of the BD recorder 801 is configured to perform the control where the advertisement data information of the disk-side advertisement information 822a to 822c stored in the hard disk drive 815 for the copyright management server 804 to determine whether to send the newest advertisement information is sent to the copyright management server 804.

Furthermore, the control unit 841 of the copyright management server 804 is configured to perform the control where, if the server-side advertisement information 22a (newest advertisement information) and any of the disk-side advertisement information 822a to 822c stored in the hard disk drive 815 match, the newest advertisement information is not sent from the copyright management server 804 and if the newest advertisement information and any of the disk-side advertisement information 822a to 822c stored in the hard disk drive 815 do not match, the newest advertisement information is sent from the copyright management server 804.

Furthermore, the control unit 811 of the BD recorder 801 is configured to perform the control where, if the server-side advertisement information 22a (newest advertisement information) is sent from the copyright management server 804, the server-side advertisement information 22a (newest advertisement information) is acquired.

As a result, because the server-side advertisement information 22a is sent from the copyright management server 804 only if the disk-side advertisement information 822a to 822c stored in the hard disk drive 815 is not the newest advertisement information, a communication volume between the BD recorder 801 and the copyright management server 804 can be prevented from increasing. Moreover, because the server-side advertisement information 22a is not sent if the disk-side advertisement information 822a to 822c stored in the hard disk drive 815 is the newest advertisement information, the time required for the ripping process can be omitted. Moreover, other effects of the advertisement information delivery system 800 according to the eighth example may be similar to those of the advertisement information delivery system 100 in the first example.

### (Ninth Example)

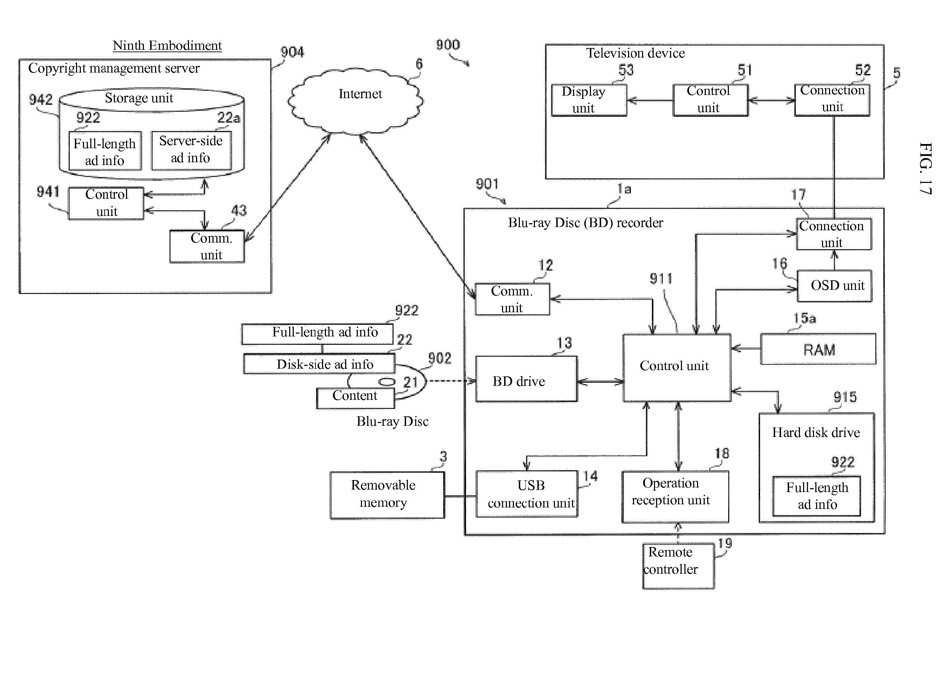

Next, a configuration of an advertisement information delivery system 900 according to one or more embodiments of a ninth example of the present invention will be described with reference to FIG. 17. In accordance with one or more embodiments of the ninth example, the BD recorder is configured to perform a control where, at the time of the ripping process, if connection to the copyright management server cannot be made, reproduction of the content is started after performing reproduction of full-length advertisement information.

As illustrated in FIG. 17, the advertisement information delivery system 900 according to one or more embodiments of the ninth example includes a BD recorder 901, a Blu-ray Disc 902, and a copyright management server 904. Moreover, the BD recorder 901 includes a control unit 911 and a hard disk drive 915. Moreover, the copyright management server 904 includes a control unit 941 and a storage unit 942.

Here, in the ninth example, as illustrated in FIG. 17, full-length advertisement information 922, the disk-side advertisement information 22, and the content 21 are provided in the Blu-ray Disc 902 of the BD recorder 901. Moreover, the full-length advertisement information 922 is configured so a reproduction time thereof is longer than that of the disk-side advertisement information 22. Moreover, the full-length advertisement information 922 and the server-side advertisement information 22a are stored in the storage unit 942 of the copyright management server 904. The disk-side advertisement information 22 is an example of the "second advertisement information" of the present invention. Moreover, the full-length advertisement information 922 is an example of the "first advertisement information" of the present invention. Moreover, other configurations of the advertisement information delivery system 900 according to the ninth example may be similar to those of the advertisement information delivery system 100 in the first example.

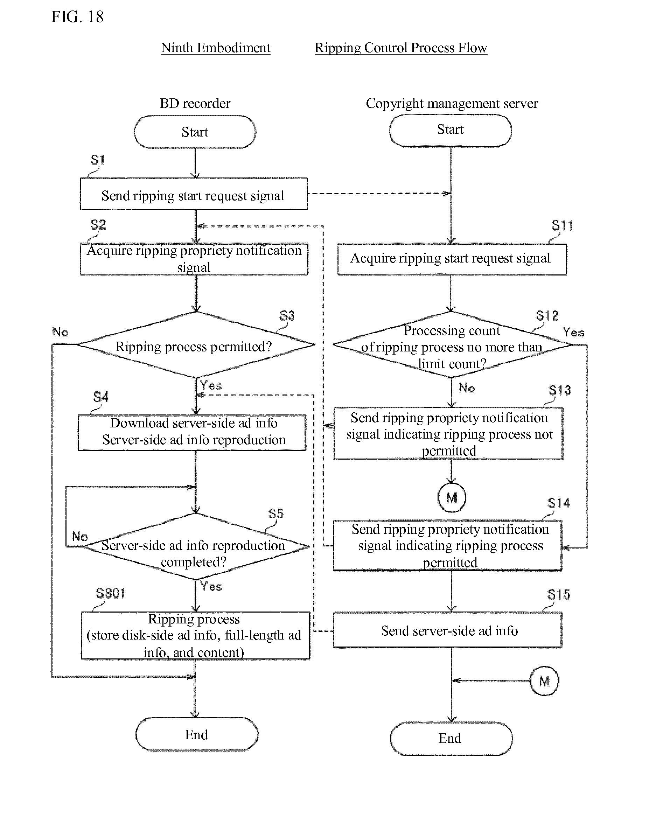

Next, a ripping control process flow of the advertisement information delivery system 900 according to one or more embodiments of the ninth example will be described with reference to FIG. 18. Processing in the BD recorder 901 is performed by the control unit 911. Processing in the copyright management server 904 is performed by the control unit 941.

Here, in the ninth example, at the time of the ripping process, the disk-side advertisement information 22 (or the server-side advertisement information 22a) and the full-length advertisement information 922 are acquired from the Blu-ray Disc 902 (or the copyright management server 904) and the acquired disk-side advertisement information 22 (or the server-side advertisement information 22a) and the full-length advertisement information 922 are stored in the hard disk drive 915 (or the removable memory 3). This will be described below.

First, as illustrated in FIG. 18, in the BD recorder 901, at steps S1 to S5, a process similar to that at steps S1 to S5 in the ripping control process flow in the first example (see FIG. 2) is performed. Then, in the ninth example, after the process at step S5, the flow proceeds to step S801.

Then, at step S801, the ripping process is performed. That is, the disk-side advertisement information 22, the full-length advertisement information 922, and the content 21 are acquired from the Blu-ray Disc 902, and the acquired disk-side advertisement information 22, full-length advertisement information 922, and content 21 are stored in the hard disk drive 915 (or the removable memory 3). Afterward, the ripping control process flow by the BD recorder 901 ends.

Meanwhile, in the copyright management server 804, as illustrated in FIG. 18, at steps S11 to S15, a process similar to that at steps S11 to S15 in the ripping control process flow in the first example (see FIG. 2) is performed. Then, after the process at step S15, the ripping control process flow by the copyright management server 904 ends.

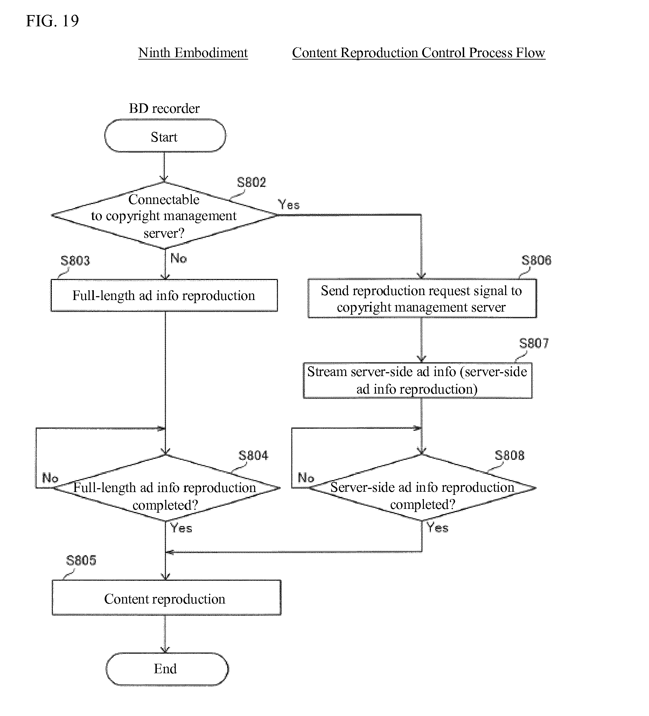

Next, a content reproduction control process flow of the advertisement information delivery system 900 according to the ninth example will be described with reference to FIG. 19. Processing in the BD recorder 901 is performed by the control unit 911. The content reproduction control process of the advertisement information delivery system 900 is executed after the ripping control process of the advertisement information delivery system 900 according to the ninth example described above (see FIG. 18).

Here, in the ninth example, when starting reproduction of the content 21, if a connection cannot be made to the copyright management server 904, reproduction of the content 21 is started after reproduction is performed for the full-length advertisement information 922. This will be described below.

First, as illustrated in FIG. 19, at step S802, it is determined whether connection is possible to the copyright management server 904. If connection is possible to the copyright management server 904, the flow proceeds to step S806, and if connection is not possible to the copyright management server 904, the flow proceeds to step S803.

Then, at step S803, reproduction is performed for the full-length advertisement information 922. Afterward, the flow proceeds to step S804.

Then, at step S804, it is determined whether reproduction of the full-length advertisement information 922 is completed. This determination is repeated until reproduction of the full-length advertisement information 922 is completed, and if reproduction of the full-length advertisement information 922 is completed, the flow proceeds to step S805.

Then, at step S805, reproduction of the content 21 is performed. Afterward, the content reproduction control process flow by the BD recorder 901 ends.

Furthermore, at step S806, to which the flow proceeds if connection is possible to the copyright management server 904 at step S802, the reproduction request signal is sent to the copyright management server 904. Afterward, the flow proceeds to step S807.

Afterward, at step S807, streaming (reproduction while acquiring) of the server-side advertisement information 22a is performed from the copyright management server 904. Afterward, the flow proceeds to step S808.

Then, at step S808, it is determined whether reproduction of the server-side advertisement information 22a is completed. This determination is repeated until reproduction of the server-side advertisement information 22a is completed, and if reproduction of the server-side advertisement information 22a is completed, the flow proceeds to step S805.

In accordance with one or more embodiments of the ninth example, effects such as below can be obtained.

In accordance with one or more embodiments of the ninth example, as above, the full-length advertisement information 922 is configured so the reproduction time thereof is longer than that of the server-side advertisement information 22a. Moreover, the control unit 911 of the BD recorder 901 is configured to perform the control where, at the time of the ripping process, the disk-side advertisement information 22 and the full-length advertisement information 922 are acquired from the Blu-ray Disc 902 (or the copyright management server 904), the acquired disk-side advertisement information 22 and full-length advertisement information 922 are stored in the hard disk drive 915 (or the removable memory 3), and, when starting reproduction of the content 21, if connection to the copyright management server 904 cannot be made, reproduction of the content 21 is started after reproduction is performed for the full-length advertisement information 922. As a result, even if a connection cannot be made to the copyright management server 904, reproduction of the content 21 can be started while providing more advertisement information to the user. Moreover, other effects of the advertisement information delivery system 900 according to the ninth example may be similar to those of the advertisement information delivery system 100 in the first example.

The descriptions herein disclosed are examples in every respect and should not be considered limiting. The scope of the present invention is indicated not by the above description of the examples but by the scope of patent claims and, further, includes meanings equivalent to the scope of patent claims and all modifications within the scope.

For example, in the first to ninth examples, as the content reproduction device of the present invention, embodiments are illustrated of using the Blu-ray Disc (BD) recorder, but the present invention is not limited thereto. In one or more embodiments of the present invention, a content reproduction device other than the BD recorder may be used as the content reproduction device. For example, a DVD (Digital Versatile Disk) recorder may be used as the content reproduction device.

Furthermore, in the first to ninth examples, as the storage medium of the present invention, an example is illustrated of using the Blu-ray Disc, but the present invention is not limited thereto. In one or more embodiments of the present invention, a storage medium other than the Blu-ray Disc may be used as the storage medium. For example, a DVD may be used as the storage medium.

Furthermore, in the first to ninth examples, as the external storage unit of the present invention, an example is illustrated of using the removable memory, but the present invention is not limited thereto. In one or more embodiments of the present invention, an external storage unit other than the removable one may be used as the external storage unit. For example, a hard disk drive configured to be externally connectable to the content reproduction device may be used as the external storage unit.

Furthermore, in the first to ninth examples, configurations of the present invention are described separately, but a form of the present invention is not limited to the above forms. One or more embodiments of the present invention may be configured by combining the first to the ninth examples with each other. For example, in the first embodiment, an example is illustrated of performing reproduction for the server-side advertisement information at the time of the ripping process, but the present invention is not limited thereto. In one or more embodiments of the present invention, the configuration of the first example where the disk-side advertisement information is stored in the hard disk drive and the configuration of the third example where reproduction is performed for the server-side advertisement information acquired from the copyright management server when content reproduction is started may be combined. In this situation, the advertisement information delivery system is configured so the disk-side advertisement information is stored in the hard disk drive and reproduction is performed for the server-side advertisement information acquired from the copyright management server when starting reproduction of the content.

Furthermore, in the fourth and fifth examples, an example is illustrated where three server-side advertisement information are provided in the copyright management server as the plurality of server-side advertisement information, but the present invention is not limited thereto. One or more embodiments of the present invention may be configured so server-side advertisement information of a number other than three are provided in the copyright management server. For example, the configuration may be such that no more than two server-side advertisement information are provided in the copyright management server or no less than four server-side advertisement information are provided in the copyright management server.

Furthermore, in the first example, an example is illustrated where the configuration is such that the ripping propriety notification signal is acquired before the server-side advertisement information is downloaded, but the present invention is not limited thereto. One or more embodiments of the present invention may be configured such that the ripping propriety notification signal is acquired after the server-side advertisement information is downloaded. In this situation, the BD recorder, after the server-side advertisement information is downloaded, performs reproduction for the server-side advertisement information, and, when reproduction of the content is completed, sends a notification to the copyright management server indicating that reproduction of the content is completed. Moreover, the copyright management server is configured to send the ripping propriety notification signal to the BD recorder according to the notification indicating that reproduction of the content is completed.

Furthermore, in the fifth example, an example is illustrated where the server-side advertisement information is selected by both the ripping history information and the reproduction count information for selecting the server-side advertisement information being sent from the BD recorder to the copyright management server, but the present invention is not limited thereto. One or more embodiments of the present invention may be configured such that the server-side advertisement information is selected by the information of at least the ripping history information or the reproduction count information being sent from the BD recorder to the copyright management server.

Furthermore, in the sixth example, as an example of the server-side advertisement information of the capacity corresponding to the remaining amount information, an example is illustrated of dropping the image quality of the server-side advertisement information and converting into the capacity corresponding to the remaining amount information, but the present invention is not limited thereto. One or more embodiments of the present invention may be configured such that the server-side advertisement information of the capacity corresponding to the remaining amount information is provided by a method other than the method of dropping the image quality of the server-side advertisement information and converting into the capacity corresponding to the remaining amount information. For example, a configuration may be such that a plurality of server-side advertisement information with mutually different capacities is provided in advance in the copyright management server and the server-side advertisement information of the capacity corresponding to the remaining amount information is sent from the copyright management server to the BD recorder.

Furthermore, in the ninth example, an example is illustrated of providing the disk-side advertisement information and the full-length advertisement information separately, but the present invention is not limited thereto. For example, a configuration may be such that a plurality of disk-side advertisement information is provided and, if the BD recorder cannot connect to the copyright management server, reproduction is performed for the longest disk-side advertisement information from among the plurality of disk-side advertisement information or reproduction is performed a plurality of times for one disk-side advertisement information.

Furthermore, in the first to ninth examples, for convenience of description, description is given using flowcharts of a flow-driven type where the processes of the control unit of the present invention are performed sequentially along the process flow, but the present invention is not limited thereto. In one or more embodiments of the present invention, process operations of the control unit may be performed by processes of an event-driven type where the processes are executed at each event. In this situation, it may be a completely event-driven type or a combination of event-driven and flow-driven types.

Furthermore, certain "units" described above may be implemented by a circuit or processor using known methods.

In addition, "ripping" or "rip" described above respectively refers to a process or an action of copying audio or video content to a hard disk, for example, from removable media such as CDs or Blu-ray Discs.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Reference Signs List]

1, 201, 301, 501, 601, 701, 801, 901 BD recorder (reproduction device)
2, 902 Blu-ray Disc (external storage medium)
3 Removable memory (external storage unit)
4, 304, 404, 504, 604, 704, 804, 804 Copyright management server
11, 211, 311, 511, 611, 711, 811, 911 Control unit (device-side control unit)
15, 515, 815, 915 Hard disk drive (internal storage unit)
19 Remote controller (operation unit)
21 Content
22, 822a to 822c Disk-side advertisement information (advertisement information, second advertisement information)
22a, 422a to 422c, 522a to 522c Server-side advertisement information (advertisement information)
41, 341, 441, 541, 641, 741, 841, 941 Control unit (server-side control unit)
42, 442, 542, 942 Storage unit (server-side storage unit)
100, 200, 300, 400, 500, 600, 700, 800, 900 Advertisement information delivery system
922 Full-length advertisement information (first advertisement information)

## Claims

1. A reproduction device (1, 201, 301, 501, 601, 701, 801, 901), comprising:
a controller (11, 211, 311, 511, 611, 711, 811, 911) configured to rip a content (21) from a storage medium and a communication unit configured to communicate with an external apparatus, wherein
based on permission information of the ripping which is acquired via the communication unit, the controller reproduces first advertisement information acquired via the communication unit before reproducing the content.

2. The reproduction device according to claim 1, wherein
the reproduction device comprises a storage unit that stores the content,
the content and second advertisement information are stored in advance in the storage medium,
and
based on the permission information of the ripping, the controller acquires the first advertisement information via the communication unit and stores the content stored in the storage medium and the first advertisement information in the storage unit.

3. The reproduction device according to claim 1 or 2, wherein
the content and second advertisement information are stored in advance in the storage medium,
and
the controller does not store the second advertisement information in the storage unit at the time of the ripping and streams the first advertisement information via the communication unit to reproduce the first advertisement information before reproducing the content.

4. The reproduction device according to any of claims 1 to 3, wherein the controller sends second advertisement information to the external apparatus via the communication unit.

5. The reproduction device according to any of claims 1 to 4, wherein the controller sends to the external apparatus via the communication unit at least one of: ripping history information relating to a content of the ripped content, and reproduction count information of the ripped content.

6. The reproduction device according to any of claims 1 to 5, wherein the controller sends to the external apparatus via the communication unit remaining amount information of a storage capacity of the storage unit.

7. The reproduction device according to any of claims 1 to 6, further comprising:
an operation unit that accepts an operation instruction, wherein
the controller acquires the first advertisement information from the external apparatus based on the operation instruction from the operation unit.

8. The reproduction device according to any of claims 1 to 7, wherein
the controller acquires and stores in the storage unit third advertisement information from the storage medium or the external apparatus at the time of the ripping,
reproduction time of the third advertisement information is longer than that of the first advertisement information and that of second advertisement information, and
if communication with the external apparatus is not possible, the controller reproduces the content after reproducing the third advertisement information stored in the storage unit.

9. A management server (4, 304, 404, 504, 604, 704, 804, 804), comprising:
a communication unit (43) configured to communicate with an external apparatus;
a controller (41, 341, 441, 541, 641, 741, 841, 941) configured to determine a propriety of ripping by the external apparatus; and
a storage unit (42, 442, 542, 942) configured to store first advertisement information, wherein
the controller is configured to send the first advertisement information when the controller sends permission information for ripping to the external apparatus.

10. The management server according to claim 9, wherein the controller permits the ripping when a processing count of the ripping is no more than a predetermined count.

11. The management server according to claim 9 or 10, wherein the controller acquires second advertisement information from the external apparatus and, if the second advertisement information does not match the first advertisement information stored by the storage unit, sends the first advertisement information to the external apparatus via the communication unit.

12. The management server according to any of claims 9 to 11, wherein
the storage unit includes a plurality of first advertisement information with mutually different content, and
the controller sends via the communication unit first advertisement information based on at least one of: ripping history information of the external apparatus, and reproduction count information of the ripped content acquired via the communication unit.

13. The management server according to any of claims 9 to 12, wherein the controller acquires remaining amount information of a storage capacity of a reproduction device-side storage unit from the external apparatus and sends advertisement information having a capacity corresponding to the remaining amount information.

14. A method for reproducing a content, comprising:
sending permission information of ripping the content from a storage medium from a management server to a reproduction device,
sending advertisement information from the management server to the reproduction device, and
performing reproduction of the advertisement information using the reproduction device before starting reproduction of the content,
wherein the management server is connected to the reproduction device via an external apparatus.
